(19) Europäisches Patentamt / European Patent Office / Office européen des brevets

(11) **EP 1 782 554 B1**

(12) **EUROPEAN PATENT SPECIFICATION**

(45) Date of publication and mention
of the grant of the patent:
**30.04.2008 Bulletin 2008/18**

(21) Application number: **04822262.4**

(22) Date of filing: **24.08.2004**

(51) Int Cl.:
*H04B 7/06* (2006.01)

(86) International application number:
**PCT/EP2004/009448**

(87) International publication number:
**WO 2006/021224 (02.03.2006 Gazette 2006/09)**

(54) **PRECODER AND METHOD FOR PRECODING AN INPUT SEQUENCE TO OBTAIN A TRANSMIT SEQUENCE**

VORCODIERER UND VERFAHREN ZUM VORCODIEREN EINER EINGANGSSEQUENZ ZUR ERHALTUNG EINER SENDESEQUENZ

PRECODEUR ET PROCEDE DE PRECODAGE D'UNE SEQUENCE D'ENTREE PERMETTANT D'OBTENIR UNE SEQUENCE D'EMISSION

(84) Designated Contracting States:
**DE GB**

(43) Date of publication of application:
**09.05.2007 Bulletin 2007/19**

(73) Proprietor: **NTT DoCoMo, Inc.
Tokyo (JP)**

(72) Inventor: **KUSUME, Katsutoshi
80634 Munich (DE)**

(74) Representative: **Stöckeler, Ferdinand et al
Schoppe, Zimmermann,
Stöckeler & Zinkler
Postfach 246
82043 Pullach bei München (DE)**

(56) References cited:
- **FISCHER R F H ET AL: "Precoding for point-to-multipoint transmission over MIMO ISI channels" COMMUNICATIONS, 2004 INTERNATIONAL ZURICH SEMINAR ON ZURICH, SWITZERLAND FEB.18-20, 2004, PISCATAWAY, NJ, USA,IEEE, 18 February 2004 (2004-02-18), pages 208-211, XP010697706 ISBN: 0-7803-8329-X**
- **FISCHER R F H ET AL: "Improved mimo precoding for decentralized receivers resembling concepts from lattice reduction" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, vol. VOL. 7 OF 7, 1 December 2003 (2003-12-01), pages 1852-1856, XP010677684 ISBN: 0-7803-7974-8**
- **NOSSEK J A ET AL: "Transmit processing in MIMO wireless systems" EMERGING TECHNOLOGIES: FRONTIERS OF MOBILE AND WIRELESS COMMUNICATION, 2004. PROCEEDINGS OF THE IEEE 6TH CIRCUITS AND SYSTEMS SYMPOSIUM ON SHANGHAI, CHINA MAY 31-JUNE 2, 2004, PISCATAWAY, NJ, USA, IEEE, vol. 1, 31 May 2004 (2004-05-31), pages I18-I23, XP010715990 ISBN: 0-7803-7938-1**
- **JOHAM M ET AL: "Multiuser Spatio-Temporal Tomlinson-Harashima Precoding for Frequency Selective Vector Channels" ITG WORKSHOP ON SMART ANTENNAS, 2004, 18 March 2004 (2004-03-18), - 19 March 2004 (2004-03-19) pages 208-215, XP002327728**

**Description**

The present invention is in the field of telecommunications, and in particular, in the field of spatial multiplexing.

Very high spectral efficiency is expected in future wireless communication systems. In G. S. Foschini and M. J. Gans, "On Limits of Wireless Communications in a Fading Environment when Using Multiple Antennas," Wireless Personal Communications, Vol. 6, No. 3, pages 311-335, March 1998 it was shown that enormous capacity increase is promised on multiple input multiple output (MIMO) channels in rich scattering environments. In order to obtain such capacity advantage on MIMO channel with reasonable complexity, vertical Bell Labs layered space-time (V-BLAST) was proposed. V-BLAST can be seen as a block decision feedback equalizer (DFE), which iteratively equalize spatial interference nonlinearly.

While the V-BLAST suffers from error propagation, a counterpart of DFE, called spatial Tomlinson-Harashima precoding (THP) has been proposed in R. Fischer, C. Windpassinger, A. Lampe, and J. Huber, "Space-Time Transmission using Tomlinson-Harashima Precoding," in Proc. of 4. ITG Conference on Source and Channel Coding, Berlin, January 2002, pages 139-147. THP was originally proposed for dispersive single input single output (SISO) channel in M. Tomlinson, "New automatic equalizer employing modulo arithmetic," Electronics Levers, vol. 7, No. 5/6, pages 138-139, March 1971 and H. Harashima and H. Miyakawa, "Matched-Transmission Technique for Channels With Intersymbol Interference," vol. 20, No. 4, pages 774-780, August 1972 to avoid inter-symbol interference at the transmitter by precoding the signals prior to the transmission. The spatial THP in R. Fischer, C. Windpassinger, A. Lampe, and J. Huber, "Space-Time Transmission using Tomlinson-Harashima Precoding," in Proc. of 4. ITG Conference on Source and Channel Coding, Berlin, January 2002, pages 139-147 moves the feedback filter of the V-BLAST to the transmitter to avoid the error propagation. But the feed-forward filter is still located at the receiver, thus all the received signals must be cooperatively processed in order to recover independent data streams that may not be possible for some scenarios.

An interesting approach of the spatial THP has been recently proposed in M. Joham, J. Brehmer, and W. Utschick, "MMSE Approaches to Multi-User Spatio-Temporal Tomlinson-Harashima Precoding," in Proc. of 5. ITG Conference on Source and Channel Coding, Erlangen, January 2004, pages 387-394. This approach moves not only the backward filter but also the forward filter to the transmitter. This architecture enables very simple receivers and it is not necessary for receivers to cooperate with each other. A particularly interesting situation is that one transmitter is serving for decentralized receivers where cooperation among receivers is not possible. However, the complexity of this approach at the transmitter becomes very high for the large number of receivers.

Tomlinson-Harashima precoding on flat fading multiple input multiple output channels is a non-linear transmission technique. Its superior performance against other conventional linear transmission techniques has been already demonstrated. However, the complexity of the non-linear technique becomes extremely higher than the simple linear transmission technique for larger number of antennas or users.

The prior art approaches suffer from the fact that, when e.g. Tomlinson-Harashima precoding is used, then a feedback filter is located at a transmitter while a feed-forward filter is placed at a receiver, which results in an increased receiver complexity and the disadvantage that such an arrangement cannot be applied for a system with decentralized receivers. On the other hand, moving the feed-forward filter to the transmitter significantly increases the transmitters complexity when compared with conventional simple linear transmission techniques.

Moreover, the conventional approaches suffer from a reduced flexibility with respect to freely deciding which data values of a number of data values being simultaneously transmitted by a number of transmit antennas is to be inter-symbol-interference-free transmitted to which receive antenna of a number of receive antennas. This can be determined during filter adaptation or design for a certain channel. However, e.g. in a case of a multi-user transmission, it might be of interest to freely direct different user streams to any receive antenna such that inter-symbol interference resulting from transmitting the other user streams to other communication channels are reduced.

In addition, the known prior art approaches suffer from high complexity due to matrix inversions needed for adapting the filter coefficients to e.g. varying channel conditions.

The article "Precoding for Point-to-Multipoint Transmission over MIMO ISO Channels" of R. F. H. Fischer et. al. (published: International Zurich Seminar on Communications, Feb. 18-20, 2004) describes a Tomlinson-Harashima type precoder for point-to-multipoint transmission over linear dispersive channels, which suffer from inter-symbol interference and multi-user interference. The article describes the tasks of matrix filters at a joint transmitter, the calculation of the matrix filters and the necessity of an optimized processing. The article describes a non-linear precoding. The precoding comprises a permutation, a predistortion, a feedforward filtering and a feedback filtering. Moreover, a factorization according to $P^T H_0(z)P = S(z)\cdot\Sigma\cdot S^H(z^{-*})$ or $P^T H_0(z)P = S(z)\cdot\Sigma\cdot S^H(z^{-*})$ is performed in order to obtain the filter matrices.

In the article "Improved MIMO Precoding for Decentralized Receivers Resembling Concepts from Lattice Reduction" of R. F.H. Fisher and C. A. Windpassinger, (Published: Globecom 2003, pages 1852-1856) describes a concept of precoding comprising a nonlinear pre-equalization for a situation with one central transmitter and a number of distributed receivers. The method described in the article is based on Tomlinson-Harashima precoding applied to a multiple input/multiple output (MIMO) channel and inspired by the concept of lattice-reduction aided detection in MIMO communication systems.

The article "Transmit Processing in MIMO Wireless Systems" of J. A. Nossek, M. Joham and W. Utschick (published: IEEE 6th CAS Symposium on Emerging Technologies: Mobile and Wireless Communications, Shanghai, China, May 31-June 2, 2004, page I-18 to I-23) describes an optimization for linear transmit processing. The article describes three filter types, similar to receiver processing: a transmit matched filter (TxMF), a transmit zero-forcing filter (TxZF) and a transmit wiener filter (TxWF). The optimizations for the linear transmit filters are extended to obtain the respective Tomlinson-Harashima precoding solution. The new formulation of the Tomlinson-Harashima optimizations directly leads to an algorithm to compute the precoding order.

The article "Multiuser Spatio-Temporal Tomlinson-Harashima Precoding for Frequency Selective Vector Channels" of M. Joham, J. Brehmer, A. Voulgarelis and W. Utschick, (published: 2004 ITG Workshop on Smart Antennas, pp. 208-215), describes different approaches to Tomlinson-Harashima precoding in a frequency-selective multi-user scenarios with a centralized multi-antenna transmitter and single-antenna receivers. Starting with spatio-temporal THP, simplifications of this relatively complex approach to systems performing either spatial THP or temporal THP are described. For each approach, a MMSE design rule is given for computing feed forward and feedback filters as well as an optimum latency time and an optimum order in which to encode the multiple data streams.

"Appendix E: Precoding for MIMO Channels" of the book "Precoding and Signal Shaping for Digital Transmission" of R. F.H. Fischer (Published: John Wiley & Sons, Inc., 2002), describes different approaches for the precoding of MIMO channels. Approaches are described, both making use of a centralized receiver and decentralized receivers. Moreover, Tomlinson-Harashima precoding is described. Besides, different approaches are given for calculating matrix filters, which may both serve as feedback filters and feed forward filters.

It is the object of the present invention to provide a concept for an efficient precoding scheme with reduced complexity in order to precode signals to be transmitted such that during transmission inter-symbol interferences are reduced.

This object is achieved by a processor according to claim 1 or 14, by a precoder according to claim 3 or 16, and by a method according to claim 18, 20, 21 or 23.

The present invention is based on the finding that an efficient precoding scheme in order to prevent inter-symbol interferences can be achieved when permuting an input sequence in order to obtain a permuted sequence and for introducing compensating inter-symbol interferences into the permuted sequence in order to obtain a transmit sequence, the transmit sequence comprising e.g. N values, each of the N values to be transmitted by a different transmitting point of N transmitting points, wherein each transmitting point comprises a transmit antenna.

In addition, by introducing the permuter prior to introducing interferences, an additional degree of designing freedom is introduced. For example, the symbols of the input sequence can freely be assigned to different symbols of the permuted sequence so that, at a receiving point, any input sequence symbol is receivable with reduced or, ideally, completely compensated inter-symbol interferences resulting when transmitting other input sequence symbols through a plurality of different channels. Moreover, these assignments can be changed without a necessity of determining e.g. new forward-filter coefficients, when e.g. the interferer has a structure corresponding to a Tomlinson-Harashima precoder and when e.g. the communication channels have not changed since the previous adaptation of the filter coefficients.

Moreover, by explicitly introducing the permuter prior to interfering, the above-mentioned degree of designing freedom can be exploited during an adaptation process of the filter coefficients such that computational complexity can significantly be reduced.

For example, the inventive permuter is arranged before the interferer, wherein the interferer may comprise a feed-back filter and a feed-forward filter. For example, the interferer may be a Tomlinson-Harashima precoder. Since the permuter can use any permuting scheme for permuting the input symbols, a permuting scheme can explicitly be introduced into a designing process of the coefficients of the feed-back filter and of the forward-filter such that e.g. complexity consuming matrix inversions can be avoided.

More specifically, the present invention further provides a concept for adapting the forward-filter coefficients and the feed-back filter coefficients on a basis of e.g. a Cholesky factorization of a matrix comprising channel information using symmetric permutations, wherein the symmetric permutations may correspond to permutation schemes to be performed by the permuter.

Further embodiments of the present invention are described with respect to the following figures, in which:

Fig. 1    shows a precoder according to an embodiment of the present invention;

Fig. 2    shows a system model of precoding in the case of a multiple input multiple output channel;

Fig. 3    shows a precoder according to an embodiment of the present invention;

Fig. 4      shows a precoder according to an embodiment of the present invention;

Fig. 5      demonstrates an inventive method for determining filter coefficients with sub-optimum ordering according to an embodiment of the present invention;

Fig. 6      demonstrates a method for precoding using calculated filter coefficients and ordering in accordance with an embodiment of the present invention;

Fig. 7      demonstrates similarity and difference between BLAST and THP;

Fig. 8      demonstrates a method for calculating filter coefficients with optimum ordering in accordance with an embodiment of the present invention;

Fig. 9      shows a complexity comparison;

Fig. 10     shows a complexity comparison;

Fig. 11     shows a performance comparison;

Fig. 12     shows a performance comparison;

Fig. 13     shows a performance comparison; and

Fig. 14     shows a performance comparison.

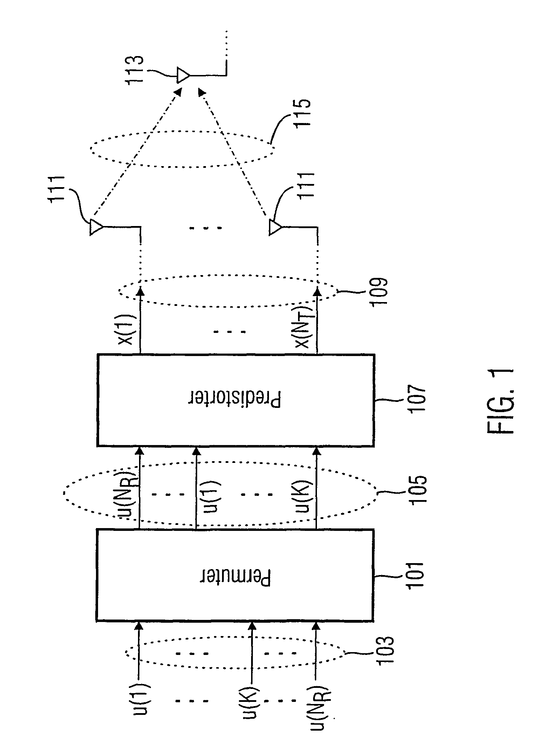

The apparatus shown in Fig. 1 comprises a permuter 101, the permuter 101 having $N_R$ inputs 103 and $N_R$ outputs 105. The $N_R$ outputs 105 are coupled to a predistorter 107, the predistorter 107 having $N_R$ inputs and $N_T$ outputs 109, each output being associated with a different transmit antenna 111.

The precoder shown in Fig. 1 is configured for precoding an input sequence having $N_R$ symbols in order to obtain a transmit sequence having $N_T$ symbols for preventing inter-symbol interferences when transmitting the transmit sequence by $N_T$ transmitting points to a receiving point 113 through $N_T$ different channels 115 wherein, as is depicted in Fig. 1, each transmit sequence symbol contained by the transmit sequence is to be transmitted by a different transmitting point through a different channel to the receiving point 113.

Generally, the sequences u and x shown in Fig. 1 can have different dimensions, i.e. $\dim(u) = N \geq \dim(x)$.

The permuter 101 is configured for reordering input sequence symbols being provided via the plurality of inputs 103 in order to obtain a permuted sequence and to provide the permuted sequence comprising $N_R$ symbols to the predistorter 107 via the plurality of outputs 105. The input sequence serves as a basis for providing the output sequence by the predistorter 107 via the plurality of outputs 109. More specifically, the input sequence comprises $N_R$ input sequence symbols where each input sequence symbol may be a real value or may be a complex value. For example, the input sequence values correspond to data streams to be transmitted, the data streams resulting from modulating information streams. For example, as is depicted in Fig. 1, the permuter 101 is configured for receiving $N_R$ input streams in parallel, wherein an input stream is provided via an associated input of the plurality of inputs 103. For example, each of the input streams corresponds to a different user or to a different information to be transmitted. In this case, the $N_R$ input sequence values correspond to $N_R$ values of different input streams provided in parallel to the permuter 101, wherein the input sequence is to be preferably simultaneously transmitted.

The precoder shown in Fig. 1 is preferably configured for precoding input sequence such that inter-symbol interferences are minimized when transmitting each transmit sequence value by an associated transmitting point to the receiving point. In this context, inter-symbol interferences result from a superposition of a plurality of receivable versions of transmit signal values being transmitted through different channels.

The permuter 101 is configured for reordering the values of the input sequence such that the permuted sequence comprises only values of the input sequence in a different order of appearance, as is depicted in Fig. 1. For example, a *k*-th input sequence symbol becomes a last permuted sequence symbol and, by way of example only, a *N*-th input sequence symbol becomes a first permuted sequence symbol.

The predistorter 107 is configured for predistorting the permuted sequence such that, ideally, the transmit sequence is intersymbol-interferrence free after propagation through the channels.

For example, the predistorter 107 is configured for introducing a compensation interference into the permuted sequence using channel information, e.g. using channel impulse responses or channel transfer functions of the plurality of channels extending from the plurality of transmitting points to the receiving point, in order to obtain the transmit sequence such that inter-symbol interferences are compensated in a receivable version of a certain transmit sequence symbol. For example, the predistorter 107 is configured for interfering the permuted sequence such that at the receiving point 113 a received version of a first input sequence symbol is, ideally, intersymbol interference free. That means, that an influence of the remaining input symbols in the receivable version of the transmit symbol is reduced. However, the predistorter 107 may be configured for introducing a compensation interference such that any input sequence symbol is interference free receivable at the transmitting point. For example, the predistorter 107 comprises the above-mentioned Tomlinson-Harashima precoder.

Since the introduced interference depends on the current channel state, it is possible that only a certain, e.g. x(k) version of the transmit sequence can be received with maximally reduced inter-symbol interferences. In order to e.g. map a certain input sequence value to the certain transmit sequence value, the permuter 101 is configured for permuting the input sequence symbols such that the receivable version of the certain transmit sequence symbol, when processed by the predistorter 107, is a receivable version of a certain input sequence symbol.

For example, the predistorter 107 provides information on a quality of inter-symbol interferences so that the transmit sequence can be permuted such that the certain transmit sequence symbol, e.g. a certain user data, is comprised by the receivable version of the certain transmit sequence symbol.

For example, in a case of a plurality of receiving antennas, it is e.g. in the case of a multi-user transmission of interest that each receiving antenna, or, generally, each receiving point, receives only a certain input sequence symbol without interferences caused by other input sequence symbols. For example, a first input sequence symbol is to be received by a first receiving point without inter-symbol interferences and a second input sequence symbol is to be received by a second receiving point without inter-symbol interferences. The predistorter 107 may be then configured for introducing compensation interference into the permuted sequence such that an optimum inter-symbol interference cancellation is obtained. However, it is possible that the first receiving point receives a received version of the second input sequence symbol and that the second receiving point receives a receivable version of the first input sequence symbol. This results from the fact that due to the current channel conditions compensation interferences can be introduced such that, at the first receiving point, the inter-symbol interferences can be reduced in such a way that the second input sequence value is receivable at the first receiving point with smallest inter-symbol interferences. In this case, the permuter may be configured for reordering the input sequence such that e.g. using the same interference compensation scheme the first receiving point preferably receives an inter-symbol interference free version of the first input sequence symbol.

However, as has been mentioned above, the inventive permuter further introduces an additional degree of designing freedom when adapting the interference compensation scheme to e.g. current channel conditions. This issue will be addressed later.

Generally, the predistorter 107 is configured for generating the compensation interference on the basis of the permuted sequence, so that, for example, a length of the transmit sequence may be equal to a length of the input sequence.

In accordance with the present invention, the predistorter may be configured for successively introducing more compensation interferences to successive permuted sequence symbols in order to take inter-symbol interferences resulting from previous permuted sequence symbols. However, the precoder 107 may be configured for successively introducing more inter-symbol interferences starting with a last permuted sequence symbol.

Generally speaking, the predistorter 107 is configured for interfering a $k$-th permuted sequence symbol using only $k$-1 permuted sequence symbols or for interfering the $k$-th permuted symbol using only the $N$-$k$ permuted sequence symbols, N denoting a number of successive permuted sequence symbols comprised by the permuted sequence.

In the following, the system model serving as a basis for further explanations will be described.

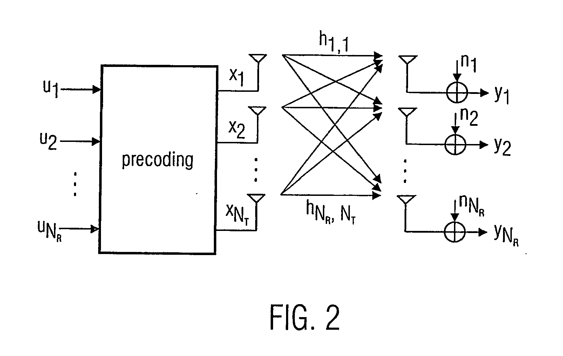

We consider a system equipped with $N_T$ transmit antennas and $N_R$ receive antennas where $N_T \geq N_R$. We assume narrow band signals so that a non-dispersive fading channel is present. The discrete time system model in the equivalent complex baseband is illustrated in Fig. 2 showing an example of a system model of precoding over flat MIMO channel.

The inputs $u_i$, $i = 1,...,N_R$ are complex valued baseband signals and are filtered by the precoding algorithm, which is explained in the next section. Its output signals $x_i$, $i = 1, ... , N_T$ are transmitted from $N_T$ antennas simultaneously. The channel tap gain from transmit antenna i to receive antenna $j$ is denoted by $h_{j,i}$. These channel taps are assumed to be independent zero mean complex Gaussian variables of equal variance $E[|h_{j,i}|]^2 = 1$. This assumption of independent paths holds if antenna spacing is sufficiently large and the system is surrounded by rich scattering environments.

The signal at receive antenna $j$ can be expressed by

$$ y_j \;=\; \sum_{i=1}^{N_T} h_{j,i} x_i \;+\; n_j \qquad (1) $$

where $n_j$ is additive noise at receive antenna $j$. By collecting {1} for $N_R$ receive antennas, the receive signals can be concisely expressed in matrix form as

$$y = Hx + n \qquad (2)$$

where

$$H = \begin{bmatrix} h_{1,1} & \cdots & h_{1,N_T} \\ \vdots & \ddots & \vdots \\ h_{N_R,1} & \cdots & h_{N_R,N_T} \end{bmatrix} \qquad (3)$$

$$y = [y_1, \ldots, y_{N_R}]^T, \; x = [x_1, \ldots, x_{N_T}]^T, \; n = [n_1, \ldots, n_{N_R}]^T,$$

and $(\cdot)^T$ denotes transposition. Our goal is to design a computationally efficient precoding algorithm, which maps the input signals $u = [u_1, \ldots, u_{N_R}]^T$ to the transmitted signal.

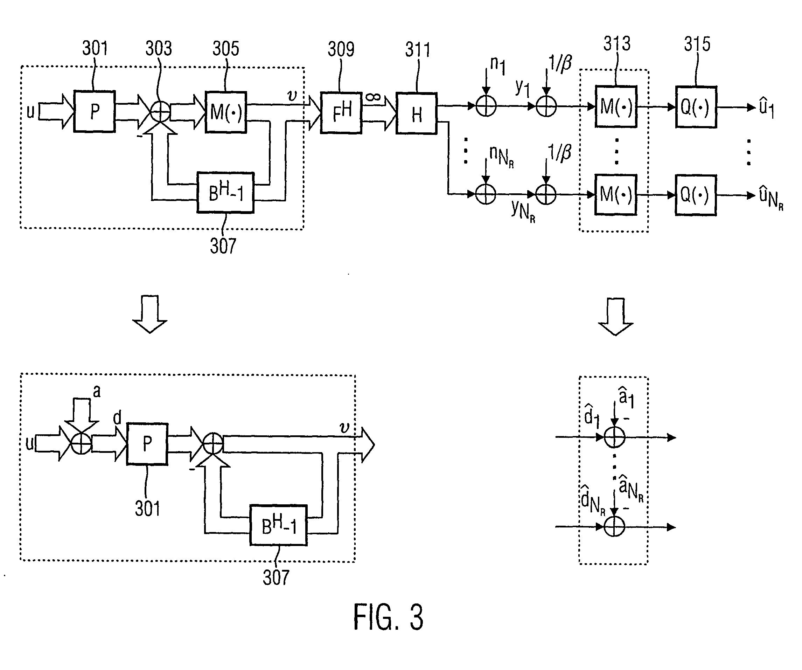

Fig. 3 shows a block diagram of a precoder according to a further embodiment of the present invention.

The apparatus comprises a permuter 301 having a plurality of inputs and a plurality of outputs coupled to an adder 303. The adder 303 has a plurality of outputs coupled to a limiter 305 and a plurality of further inputs coupled to a plurality of outputs of a feedback filter 307.

A plurality of outputs of the limiter 305 is coupled to a plurality of inputs of the feed-back filter 307 and to a plurality of inputs of a forward-filter 309, the forward-filter 309 having a plurality of outputs.

As is depicted in Fig. 3, the transmit sequence is transmitted via a plurality of channels 311 to $N_R$ receiving points, wherein each transmit sequence symbol is corrupted by channel noise n. At a receiver, each receive version of a transmit sequence symbol is multiplied by a scaling factor $1/\beta$, and the result is provided to a delimiter 313 being configured for performing an operation being inverse to that being performed by the limiter 305. The outputs of the delimiters 313 are coupled to detectors 315 for detecting the input sequence symbols.

In accordance with a further aspect of the present invention, the predistorter 107 being comprised by the inventive precoder comprises an adder for adding a feed-back sequence to the permuted sequence in order to obtain an interfered sequence, a feed-back filter for filtering the interfered sequence to provide a feed-back sequence, a forward filter for filtering the interfered sequence to obtain the transmit sequence.

As is depicted in Fig. 3, a permuted sequence provided by the permuter 301 by permuting input sequence values is provided to the adder 303 for introducing the compensating interference into the permuted sequence.

In Fig. 3, the adder 303 and the limiter 305 are depicted separately. However, the limiter 305 may be a part of the adder 303. The limiter 305 may be configured for performing a modulo operation. However, the limiter 305 is optional.

The forward filter 309 is preferably configured for filtering the interfered sequence provided via the pluralities of inputs to the forward filter 309 using different sets of forward-filter coefficients for obtaining different symbols of the transmit sequence in order to reduce channel influence when transmitting the transmit sequence. For example, the forward filter 309 is a block filter being configured for providing a transmit sequence symbol by multiplying the interfered sequence by a corresponding set of forward filter coefficients. For example, each interfered sequence value is multiplied by a different coefficient and the result is summed-up in order to obtain a transmit sequence value. In other words, the forward filter 309 may be configured for performing a vector by vector multiplication (inner product) for obtaining a transmit symbol value.

As will be shown later, the forward filter 309 is configured for introducing channel information into the transmit sequence.

As has been mentioned above, the feed-back filter 307 is configured for introducing the compensation interference into the permuted sequence. To do so, the feed-back filter 307 is configured for filtering the interfered sequence using different sets of feed-back filter coefficients to obtain different feed-back sequence symbols, correspondingly to the operation of the forward filter 309. Therefore, each permuted sequence symbol can be interfered using different interference schemes.

The limiter 305 may be configured for performing a non-linear modulo operation in order to limit a power of the resulting interfered sequence. Accordingly, at a receiver, an inverse non-linear operation is to be performed. For the sake of analysis only, the lower part of Fig. 3 shows a linear representation of the functionality of the limiter 305 where the non-linear limiting operation is represented by an additional, auxiliary, variable (a) being added to the input sequence (u). Accordingly, the delimiting operation at a receiver can be, e.g. for the sake of analysis, linearized, as it is shown in the corresponding lower part of Fig. 3.

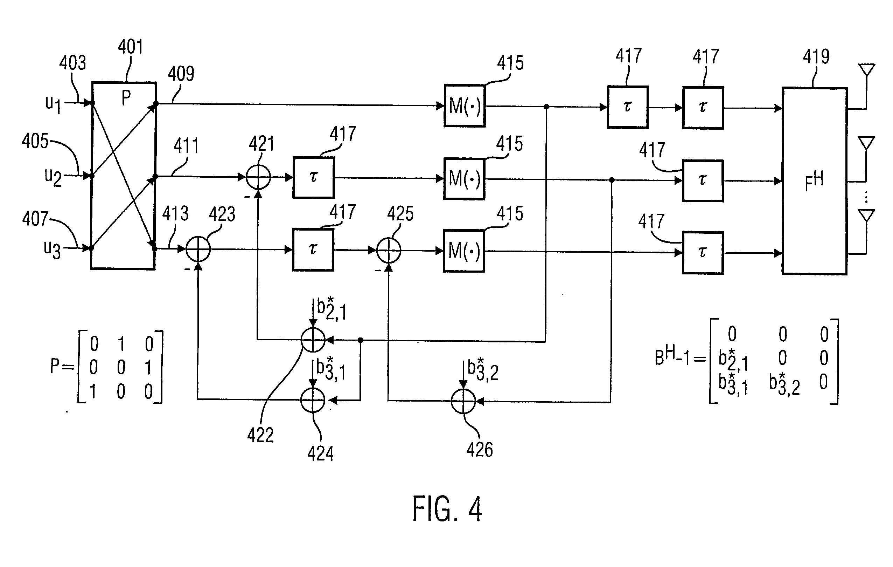

The permuter 301, the forward filter 309, and the feed-back filter 307 may be implemented as digital signal processing units, by way of example only. However, the functionality of the permuter 301, the forward filter 309, and the feed-back filter 307 can be obtained by the means of hard wiring, which scenario is depicted in Fig. 4 showing a further embodiment of the inventive precoder.

Fig. 4 shows a structure of the inventive precoder, for the case of 3 data streams and lower triangulized backward filter (feed-back filter), by way of example only.

The precoder comprises a permuter 401 having a first input 403, a second input 405, and a third input 407. For permuting the input sequence provided via the inputs 403, 405, and 407, each of the inputs is connected to a different output of the permuter 401 so that permuting can be performed by means of hard wiring, which hard wiring can be switchable. More specifically, as is depicted in Fig. 4, the second input 405 is connected to a first output 409, the third input 407 is connected to a second output 411 and the first input 403 is connected to a third output 413, by way of example only.

The first output 409 is connected via a first limiter 415 and a number of delay elements 417 to a forward filter 419.

The second output 411 is connected via an adder 421, a delay element 417, a limiter 415, and a delay element 417 to a second input of the forward filter 419. Correspondingly, the third output 413 is coupled via an adder 423, a delay element 417, an adder 425, a limiter 415, and a delay element 417 to a third input of the filter 419.

The adder 421 is configured for adding a limited version of the first permuted sequence value provided by the first output 419, the limited version being multiplied using a multiplier 422 by a coefficient corresponding to a coefficient of the feed-back filter.

Accordingly, the multiplier 424 is configured for adding the limited version of the first permuted sequence value to a third permuted sequence value, the limited version being multiplied by a multiplier 424 by another coefficient of the feed-back filter.

In other words, the adder 421 is configured for interfering the second permuted sequence value using the first permuted sequence value, and the adder 423 is configured for interfering the third permuted sequence value using the first permuted sequence value or a limited version thereof. Correspondingly, the adder 425 is configured for introducing additional interference into the third permuted signal value using a limited and interfered version of the second permuted sequence value, after multiplying same by a further coefficient of the feed-back filter using a multiplier 426.

It is to be noted that the delay elements 417 are introduced in order to compensate processing delays resulting from e.g. limiting the signals. Moreover, as is depicted in Fig. 4, the hard wired permuter 401 has a functionality of a matrix permuter P also shown in Fig. 4. Moreover, the wiring structure, except for the delay elements 417, corresponds to introducing the feed-back sequence into the permuted sequence using a matrix feed-back filter $B^H$-1 having a lower triangular structure, as is depicted in Fig. 4. However, the feedback filter can have an upper triangular structure.

In other words, Fig. 4 shows a specific hard wired implementation of the inventive precoder shown in Fig. 3 for a certain permuting scheme being determined by the matrix $B$ and for a certain structure of the feed-back filter.

For example, when the plurality of channels remains constant during a transmission interval, then neither a permuting scheme nor the feed-back filter coefficients nor the forward filter coefficients need to be adapted. However, for the case of e.g. time varying channels, an adaption is to be performed in order to take the varying channel characteristics into account when precoding the input sequence at a transmitter such that inter-symbol interferences due to channel influences are prevented. As has been mentioned before, the inventive permuter being placed before the interferer, the interferer comprising e.g. the adder, the limiter, the forward filter, and the backward filter, may be exploited for reducing complexity while determining new coefficients of e.g. the feed-forward filter.

Preferably, the inventive processor is configured for jointly determining a permuting scheme used by the permuter to permute forward filter coefficients and feed-back filter coefficient in order to adapt the permuter, the forward filter, and the forward filter to varying channel conditions.

As is shown in Fig. 3, the permuting scheme, the forward filter coefficients and the feed-back filter coefficients can be replaced when performing these operations using digital signal processing methods. However, also in the case of a hard wired structure, as is depicted in Fig. 4, an adaption of the structure is possible. For example, the precoder 401 is controllable via the processor in order to collect the inputs with outputs required for obtaining a certain permutation scheme. Correspondingly, the feed-back filter coefficients used by the multipliers 422, 424, and 426 can be updated.

For example, the processor may be configured for determining the permuting scheme, the forward filter coefficients and the feed-back filter coefficients such that a detection error associated with detecting an input sequence symbol in a receivable version of a first transmit sequence symbol is smaller than a detection error associated with detecting another input sequence symbol in a receivable version of a second transmit sequence symbol. In other words, the inventive processor may be configured for determining the filter coefficients and the permuting scheme such that, when decoding the receivable versions of the obtained transmit sequence values, e.g. an increasing estimation error or a decreasing estimation error while successively detecting successive received values is obtained. In other words, the processor is configured for determining the filter coefficients and the estimation scheme such that a detection ordering can explicitly be taken into account. This issue will be described later.

By way of example only, the permuter may be configured for performing the first permuting scheme to obtain a first permuted sequence value, and for performing a second permuting scheme for obtaining a second permuted sequence value. Correspondingly, the feed-back filter may be configured for filtering the interfered sequence using a first set of feed-back filter coefficients for obtaining a first feed-back sequence symbol to be added to the first permuted sequence symbol, and for filtering the interleaved sequence using a second set of feed-back filter coefficients for obtaining a second feed-back sequence symbol to be added to the second permuted sequence symbol. Correspondingly, the forward filter may be configured for filtering the interfered sequence using a first set of forward coefficients to obtain a first transmit symbol value and for filtering the interfered sequence using a second set of forward filter coefficients for obtaining a second transmit symbol value. In this case, the inventive processor may be configured for jointly determining the first permuting scheme, the first set of feed-back filter coefficients and the first set of forward filter coefficients such that a detection error associated with effecting an input sequence symbol in a receivable version of the first transmit sequence symbol has a first error value, and for jointly determining the second permuting scheme, the second set of forward filter coefficients and the second set of feed-back filter coefficients such that a detection error associated with detecting an input sequence symbol in a receivable version of the second transmit sequence symbol has a second error value, the first error value being greater than the second error value or the second error value being greater than the first error value. In a receiver, the symbols can be detected simultaneously and independently.

For example, the forward filter as a block filter having N successive columns or N successive rows, each column or each row representing a different set of filter coefficients. In other words, the forward filter may be configured for column or row-wise multiplying the interfered sequence by a different set of coefficients in order to obtain a transmit sequence symbol.

For example, the forward filter configured for multiplying the interfered sequence by a first column (or a first row) to obtain a first transmit sequence symbol, and for multiplying the interfered sequence by a second column (or a second row) for obtaining a second transmit sequence symbol, for example, the forward filter is configured for performing an inner product.

Correspondingly, as depicted e.g. in Fig. 4, the feed-back filter may have N successive columns or N successive rows, each column or each row representing a different set of feed-back filter coefficients in order to perform operations corresponding to those performed by the forward filter.

In order to separately process the permuted sequence and the interfered sequence in order to obtain separately processed transmit sequence symbols, the processor may be configured for jointly and successively determining the successive N columns or the successive N rows of the forward filter and the successive N columns or successive N rows of the feed-back filter starting with a first column or starting with a first row and ending with a *N-th* column or *N-th* row. In other words, the processor is configured for determining the forward filter coefficients and the feed-back filter coefficients in dependence on a precoding direction being determined by an order of providing the transmit sequence symbols.

However, the processor may be configured for determining the N columns and/or N rows of the feed-back filter and the N columns and/or N rows of the forward filter starting with the *N-th* column or row and ending with the first column or row, i.e. starting with the last column or row and ending with the first column or row which defines the precoding direction.

In accordance with a further aspect of the present invention, the processor is configured for determining the columns or rows of the forward filter and the columns or rows of the feed-back filter, and a permutation scheme for each row or column of the forward filter and the feed-back filter iteratively starting with a first column or row of the feed-back filter and a first column or row of the forward filter or starting with the last column or last row of the forward filter and last column or row of the feed-back filter, wherein an iteration direction, i.e. iteratively determining the successive columns starting with the first columns or iteratively determining the successive columns starting with a last column, is determined by an error value ratio between detection error associated with detecting an input sequence symbol in a first transmit sequence symbol and a detection error associated with detecting a further input sequence in a *N*-th transmit sequence value.

In accordance with the present invention, the processor is configured for determining the permutation scheme, the forward filter coefficients and the feed-back filter coefficients on a basis of a Cholesky factorization of a channel information matrix using symmetric permutations, the symmetric permutations determining the permutation scheme. The channel information matrix may comprise e.g. a channel auto-correlation matrix of the resulting channel comprising the plurality of channels.

In the following, further embodiments of the present invention will be described.

The overall system structure is illustrated as a block diagram in Fig. 3. The input signal vector $u \in C^{N_R}$ is first reordered in such a way that it can take best benefit from the filtering that follows. The ordering is expressed by the permutation matrix defined as

$$P = \sum_{i=1}^{N_R} e_i e_{k_i}^T \in \{0,1\}^{N_R \times N_R} \qquad (4)$$

where $e_i$ is the i-th column of the $N_R \times N_R$ identity matrix and $\{k_i, \ldots, k_{N_R}\}$ denotes the precoding ordering. Its output signal vector $v \in C^{N_R}$ is iteratively filtered by the backward filter $B^H \in C^{N_R \times N_R}$ and by the modulo operator $M(\bullet)$. The modulo operator is introduced in order to reduce the increase of signal power caused by the backward filtering. The modulo operation for complex variable c is defined as

$$M(c) = c - \lfloor \mathrm{Re}(c)/\kappa + 1/2 \rfloor \kappa - j \lfloor \mathrm{Im}(c)/\kappa + 1/2 \rfloor \kappa \qquad (5)$$

where the floor operator $\lfloor \bullet \rfloor$ gives the integer smaller than or equal to the argument and the constant $\kappa$ is determined by the modulation alphabet used, e.g. $\kappa = 2\sqrt{2}$ for QPSK symbols. Consequently, the output signal $v_j$ from $M(\bullet)$ is an element of the set

$$M = \{x + jy | x, y \in (-\kappa/2, \kappa/2)\} \qquad (6)$$

and has the variance of $\sigma_v^2 = \kappa^2/6$ under the assumption that $v_j$ is uniformly distributed both in real and imaginary parts.

The output signal $v$ from the feedback section is further processed by the forward filter $F^H \in C^{N_T \times N_R}$ to get the transmit signal vector x. The receive signal vector **y** is shown in (2) and each element of the vector is independently detected. The receive signal $y_j$ at the $j$-th antenna is multiplied by the weighting factor $1/\beta$ to control the signal amplitude, then modulo operator is applied to get rid of the respective effect of the modulo operation at the transmitter. The quantizer $Q(\bullet)$ generates the estimate $\hat{u}_j$ from the output of the modulo operator.

Our goal is to jointly optimize the three tuple of the precoding ordering P, the backward filter $B^H$, and the forward filter $F^H$ that constitute the precoding. In order to formulate the joint optimization using linear equations, the non-linear modulo operator is interpreted by the linear representation as shown in the lower part of Fig. 3. We introduce the signal vectors $\alpha$ and **d** which satisfy the signal $v$ to be in the set **M**. The real and imaginary parts of **a** are the integer multiples of the constant $\kappa$. Indeed, **a** is implicitly chosen by the modulo operation in (5) both at the transmitter and the receiver. Note that we are not interested in the values of a, however now we can formulate the optimization problem with respect to the desired signal d only with linear equations.

The signal $v$ after the backward filtering can be written as

$$v = Pd - \left(B^H - 1\right)v \qquad (7)$$

which is solved for d yielding

$$d = P^T B^H v \qquad (8)$$

while the estimated desired signal at the receiver reads as

$$\hat{d} = \beta^{-1}HF^H\upsilon + \beta^{-1}n \qquad (9)$$

By defining the error signal $\varepsilon = \hat{d} - d$, the error covariance matrix $\Phi_{\varepsilon\varepsilon} = E[\varepsilon\varepsilon^H]$ is calculated as

$$\Phi_{\varepsilon\varepsilon} = \beta^{-1}\sigma_\upsilon^2 HF^H FH^H + \sigma_\upsilon^2 P^T B^H BP$$
$$- 2\beta^{-1}\sigma_\upsilon^2 \operatorname{Re}(HF^H BP) + \beta^{-1}\sigma_n^2 1 \qquad (10)$$

assuming that

$$E[\upsilon\upsilon^H] = \sigma_\upsilon^2 1, E[nn^H] = \sigma_n^2 1, \text{ and } E[\upsilon n^H] = 0 \qquad (11)$$

With the error covariance matrix, the MSE is expressed as

$$\varphi = E[\varepsilon^H \varepsilon] = tr(\Phi_{\varepsilon\varepsilon}) \qquad (12)$$

This is the cost function and has to be minimized.

There are additionally two constraints, which have to be satisfied. The first one is to limit the total transmit power to certain value $E_s$. The second constraint is the structure of the backward filter, which must be strictly lower (or upper) triangular. This would be better understood by the example illustrated in Fig. 4. This shows a case where three data streams are present and the backward filter is strictly lower triangular. In this example, the data streams after the permutation are precoded from the upper to the down stream that constraints the backward filter structure to be lower triangular. If the backward filter is to be upper triangular, the precoding starts from the bottom stream. In either case, the triangular structure ensures the causality of the feedback process in the matrix form.

Taking into account these constraints, the optimization problem is now formulated as

$$\{F_{opt}^H, B_{opt}^H, \beta_{opt}\} = \operatorname*{argmin}_{\{F^H, B^H, \beta\}} \varphi$$
$$\text{s.t} : E[\|x\|_2^2] = E_s \text{ und} \qquad (13)$$
$$S_i(B^H - 1)e_i = 0_i \text{ for } i = 1, \ldots, N_R$$

where the backward filter is constrained to be strictly lower triangular using $S_4$, which is defined as

$$S_i = [1_i, 0_{i \times N_R - i}] \in \{0,1\}^{i \times N_R} \qquad (14)$$

Note that the constraint of the lower triangular structure is defined for every column of the backward filter so that its upper triangular part must be zero. The optimization problem in (13) can be solved using Lagrangian multipliers and we get the solution for the backward and forward filter as

$$B_{opt}^{H} = \sum_{i=1}^{N_R} P\Phi P^{T} S_i^{T} \left(S_i P\Phi P^{T} S_i^{T}\right)^{-1} S_i e_i e_i^{T}$$

$$F_{opt}^{H} = \beta_{opt}\sum_{i=1}^{N_R} H^{H} P^{T} S_i^{T} \left(S_i P\Phi P^{T} S_i^{T}\right)^{-1} S_i e_i e_i^{T}$$

$$(15)$$

where $\Phi$ is defined as

$$\Phi = HH^{H} + \frac{N_R}{\gamma} 1 \quad (16)$$

and $\gamma = E_s/N_o$. The optimum weighting factor $\beta_{opt}$, can be easily calculated to satisfy the transmit power constraint in (13).

As can be seen from (15), the filters are determined column by column, each of which requires one matrix inverse resulting in the total complexity order of $O\left(N_R^4\right)$.

This section explains two proposed algorithms, which are highly computational efficient. One is a sub-optimum solution, whose performance slightly degrades comparing to the optimum solution, however its complexity corresponds to only one matrix inversion. Another optimum algorithm performs equivalent to the solution in (15) with the complexity slightly higher than the sub-optimum algorithm, however still significantly lower than that of the originally proposed scheme in M. Joham, J. Brehmer, and W. Utschick, "MMSE Approaches to Multi-User Spatio-Temporal Tomlinson-Harashima Precoding," in Proc. of 5. ITG Conference on Source and Channel Coding, Erlangen, January 2004, pages 387-394, for large $N_R$.

In the following the inventive sub-optimum ordered Cholesky scheme will be described.

One can observe that the complex optimum solution in (15) has the term involving $\Phi$, which has to be inverted $N_R$ times. Since $\Phi$ is Hermitian and positive definite, Cholesky factorization with symmetric permutation as disclosed in G. H. Golub and C.F. V. Loan, Matrix Computations, 3rd ed. The Johns Hopkins University Press, 1996, can be calculated as

$$P\Phi P^{T} = LDL^{H} \quad (17)$$

where $P, L$, and $D = \mathrm{diag}(d_1...,d_{N_R})$ are the permutation, the unit lower triangular, and the diagonal matrix, respectively. With (17), it can be shown that the backward and forward filters in (15) reduce to

$$B^{H} = L \text{ and } F^{H} = \beta H^{H} P^{T} L^{H,-1} D^{-1} \quad (18)$$

This leads to significant computational reduction, i.e. one factorization in (17) and the inversion of triangular matrix in (18) suffice instead of $N_R$ times matrix inversions. This complexity corresponds to only one matrix inversion of the positive definite matrix $\Phi$.

The MSE $\varphi$ in (12) can also be simplified using the results in (18) as

$$\varphi = \frac{\sigma_v^2 N_R}{\gamma} \sum_{i=1}^{N_R} d_i^{-1} \quad (19)$$

This means that the MSE is determined by the sum of the diagonal entries of $D^{-1}$. The optimality depends on the way to compute the factorization in (17). A successive algorithm calculating (17) finds the diagonal entry starting from $d_1$ up to $d_{N_R}$, with necessary permutations.

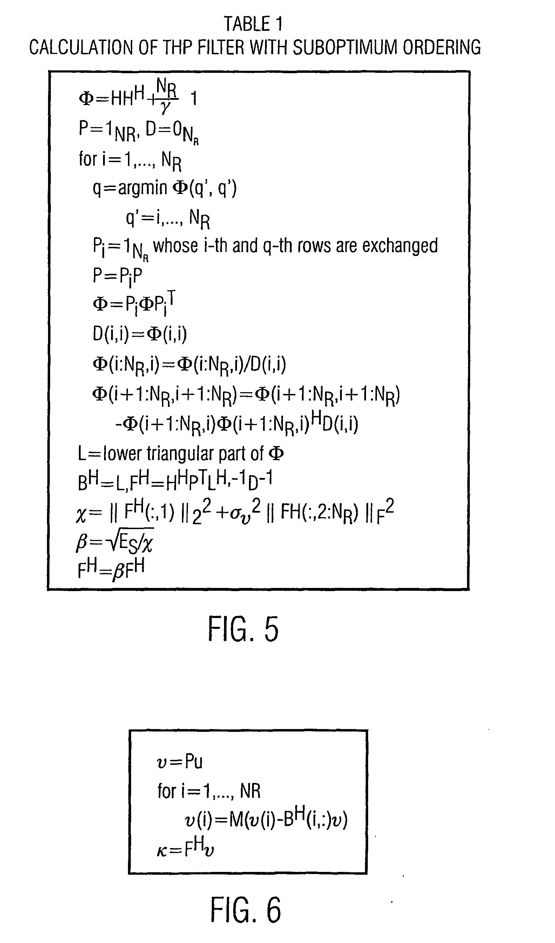

Our proposed pseudo codes for filter calculation and filtering are respectively summarized in Fig. 5 and Fig. 6.

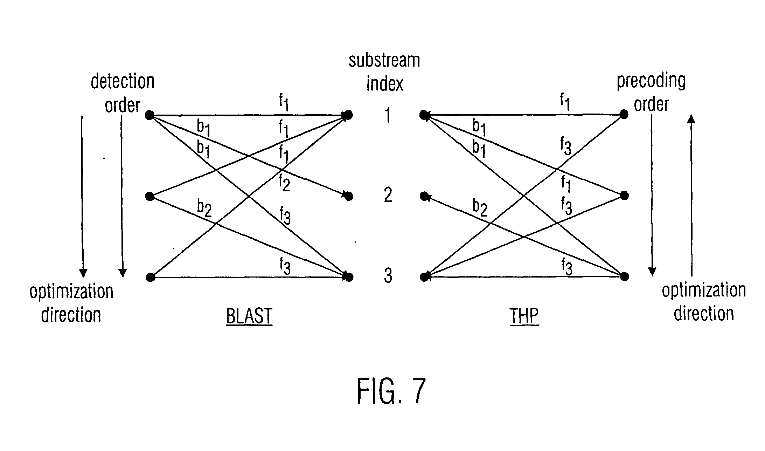

As can be observed in Fig. 5 and Fig. 6, the same direction of the optimization (i.e. for i = 1,...,$N_R$) is applied for that of the precoding. This is however not desirable and is in contrast to the BLAST algorithm. The similarity and difference between BLAST and THP are illustrated in Fig. 7 demonstrating similarities and differences between BLAST and THP. Both apply interference cancellation successively but a number of constraints $f_i$ for forward filters varies in different ways as the successive detection/precoding advances.In the BLAST case, the direction of both the detection and the filter optimization is the same because the number of constraints, denoted as $f_i$ where $i$ is the sub-stream index, decreases as the successive detection proceeds. This means that the earlier the detection stage, the harder is the optimization due to more constraints. Therefore the filter for the earlier stage has to be optimized beforehand to improve the overall performance. In Fig. 7, $b_i$ denotes interference cancellation performed by the backward filter of the substream $i$.

In the THP case, on the other hand, the number of constraints increases as the precoding advances because the filter at the later stage must avoid the interference to already precoded sub-streams in the earlier precoding stages. Therefore, the filter optimization must be performed in the opposite direction to that of the precoding. The optimum ordering strategy is presented in the next section.

In order to have desired direction of filter optimization, the modified Cholesky factorization with symmetric permutation is computed for $\Phi^{-1}$ instead of $\Phi$ (cf, 17) as follows

$$P\Phi^{-1}P^T - L^H D L \qquad (20)$$

With this factorization, the backward and forward filters in (15) are calculated as (cf. 18)

$$B_{opt}^H = L^{-1} \text{ and } F_{opt}^H = \beta H^H P^T L^H D \qquad (21)$$

and the MSE $\varphi$ reads as (cf. 19)

$$\varphi = \frac{\sigma_v^2 N_R}{\gamma} \sum_{i=1}^{N_R} d_i \qquad (22)$$

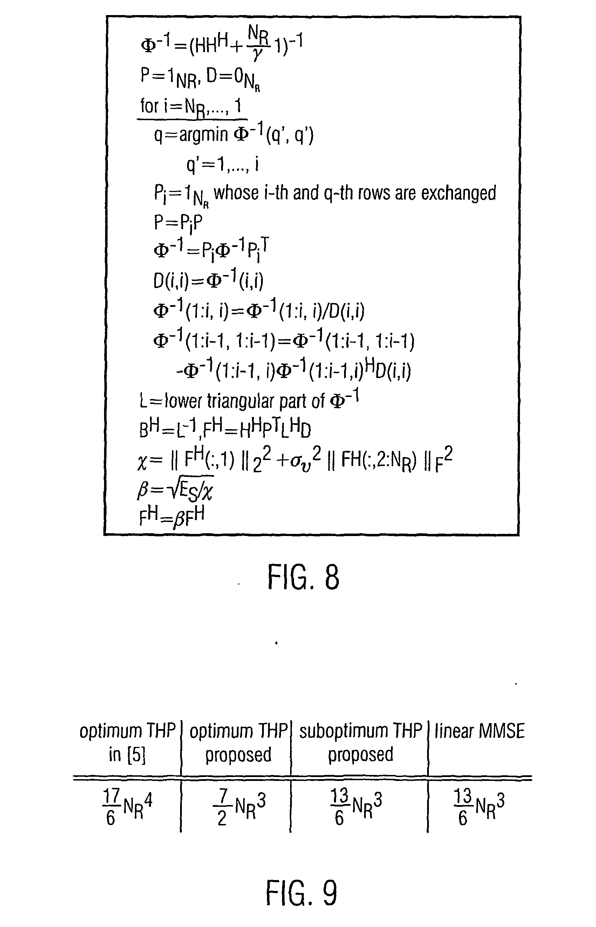

The iterative algorithm to compute (20) finds the diagonal entry starting from $d_{N_R}$ down to $d_1$ with optimum permutations. This optimization direction is opposite to that of the precoding filtering (for $i = 1,..., N_R$). This reverse direction is desired as discussed in the previous section. Our proposed algorithm to compute the factorization and filters is summarized as pseudo code in Fig. 8. In each iteration the algorithm finds the minimum diagonal entry of $\Phi^{-1}$. This diagonal entry $\Phi^{-1}(i, i) = d_i$ is the MSE (cf. 22). Thus, the algorithm finds the optimum ordering in MMSE sense iteratively.

To compare the complexity, the number of additions and multiplications is analytically computed. The optimum MMSE THP presented in M. Joham, J. Brehmer, and W. Utschick, "MMSE Approaches to Multi-User Spatio-Temporal Tomlinson-Harashima Precoding," in Proc. of 5. ITG Conference on Source and Channel Coding, Erlangen, January 2004, pages 387-394, computes matrix inversion of the positive definite matrix $N_R$ times, which results in $\frac{1}{2} N_R^3 N_T + \frac{2}{3} N_R^4$ additions and $N_R^3 N_T + \frac{2}{3} N_R^4$ multiplications. Our optimum algorithm computes $\Phi^{-1}$, its Cholesky factorization with symmetric permutation, and inversion of the lower triangular matrix. The complexity can be computed as $\frac{1}{2} N_R^2 N_T + N_R^3$ additions and $N_R^2 N_T + N_R^3$ multiplications. In our sub-optimum case, the computation of $\Phi^{-1}$ at the first step of the optimum case is not necessary. The complexity reduces to $\frac{1}{2} N_R^2 N_T + \frac{1}{3} N_R^3$ additions and $N_R^2 N_T + \frac{1}{3} N_R^3$ multiplications. Note that this complexity can also be regarded as that of the linear MMSE transmit filter $\beta H^H \Phi^{-1}$ since our sub-optimum algorithm gives $\Phi^{-1} = L^{H,-1} D^{-1} L^{-1}$ (cf. 17 and 18) without permutation (P = 1).

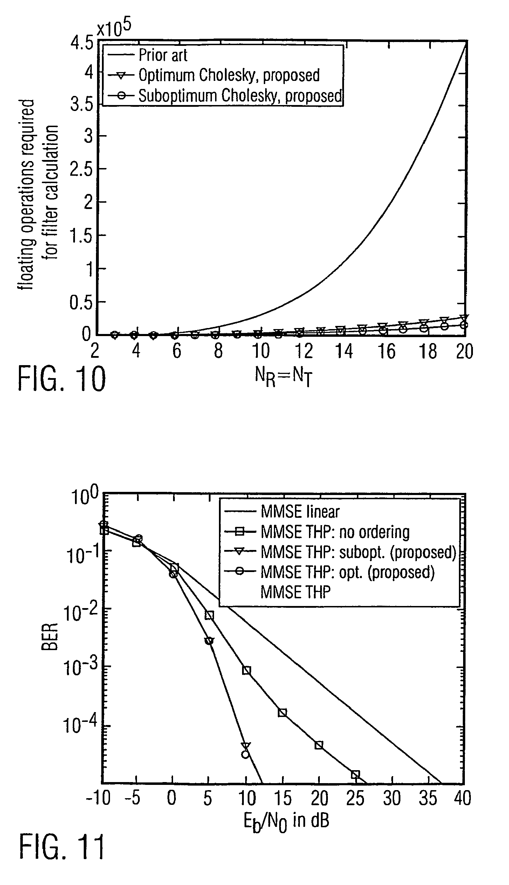

The required additions and multiplications are separately computed because the computational costs may differ depending on the processor's architecture. As an example, the complexities discussed above are summarized in Fig. 9 for a system with $N_R = N_T$ antennas using a processor, which requires the same number of operations for additions and multiplications. Comparing to the optimum THP as disclosed in M. Joham, J. Brehmer, and W. Utschick, "MMSE Approaches to Multi-User Spatio-Temporal Tomlinson-Harashima Precoding," in Proc. of 5. ITG Conference on Source and Channel Coding, Erlangen, January 2004, pages 387-394, our sub-optimum and optimum algorithms reduce the complexity in a factor of $1,3N_R$ and $0,8N_R$, respectively. Note again, that our sub-optimum algorithm requires the complexly equivalent to that of simple linear MMSE. The complexities are also illustrated in Fig. 10 with respect to the number of antennas when $N_T = N_R$. Fig. 10 shows required floating point operations with respect to the number of data streams with equal number of antennas at transmitter and receiver.

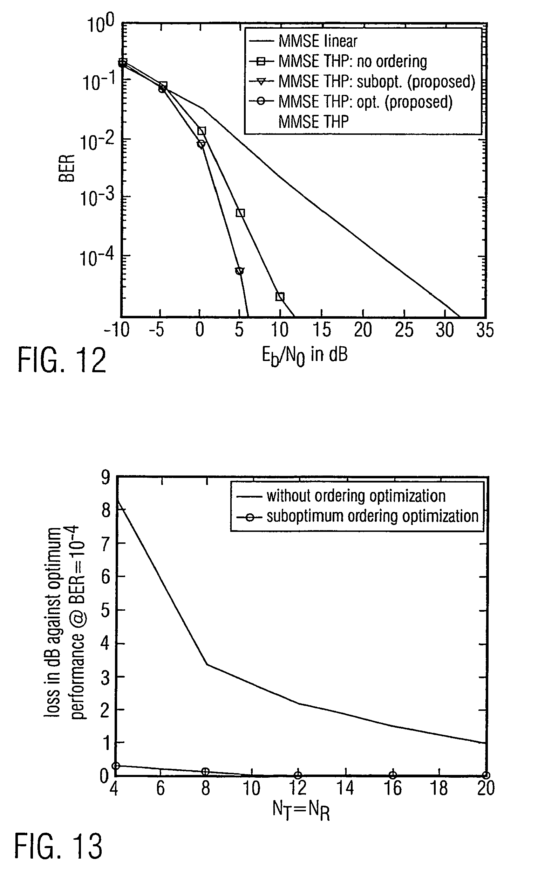

Computer simulations are performed to evaluate the performance of our proposed algorithms. Figs. 11 and 12 show the BER performance over $E_b/N_0$ for a system with $N_T = N_R = 4$ and $N_T = N_R = 8$ antennas, respectively. The impact of the ordering optimization can be observed in these figures. For comparison, the performance of the MMSE linear filter is also plotted. Significant advantage of the nonlinear THP can be seen against the linear filter. Our proposed optimum algorithm achieves exactly the same performance of the complex solution as disclosed in M. Joham, J. Brehmer, and W. Utschick, "MMSE Approaches to Multi-User Spatio-Temporal Tomlinson-Harashima Precoding," in Proc. of 5. ITG Conference on Source and Channel Coding, Erlangen, January 2004, pages 387-394. Our sub-optimum solution shows slight performance degradation against the optimum case for $N_T = N_R = 4$, however the gap disappears for $N_T = N_R = 8$.

The performance loss due to the sub-optimality of the ordering optimization is illustrated in. Fig. 13. The performance loss in dB against the optimum ordering at BER = $10^{-4}$ is plotted over the number of antenna elements ($N_T = N_R$). It can be observed that the performance loss decreases as the number of antennas increases. If no optimization is performed on the precoding ordering, the performance loss is above 8 dB for a system with $N_T = N_R = 4$ antennas while less than 0.3 dB loss can be observed for our sub-optimum algorithm. The performance loss completely disappears for the larger number of antennas.

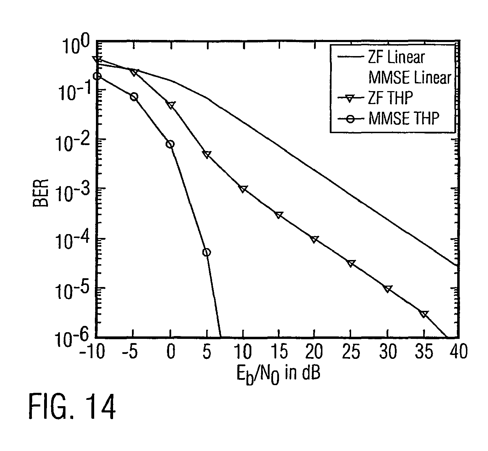

Fig. 14 compares the performance from different transmission schemes. The performance of the MMSE non-linear THP superior to other schemes can now be obtained by our proposed algorithm with the complexity equivalent to linear approaches. The THP approach requires modulo operation, but its complexity is of minor impact on the total complexity.

We have derived a new complexity efficient MMSE THP algorithm on flat MIMO channels. The proposed scheme is especially effective for a system with decentralized receivers, which cannot cooperate with each other.

Interferences among different receivers are resolved at the transmitter prior to the signal transmission based on the MIMO channel state information. It has been shown that the superior performance of the nonlinear MMSE THP against linear variants, however the complexity is significantly higher than the linear approaches for the larger number of antennas. We showed that the large performance advantage of the THP can be obtained with complexity equivalent to the simple linear approach.

Fig. 11 shows BER performance for $N_T = N_R = 4$. The inventive optimum algorithm performs equivalent to the prior art approach, however with significantly less complexity. Fig. 12 shows BER performance for $N_T = N_R = 8$. Fig. 13 shows performance in dB due to the ordering algorithm at BER = $10^{-4}$. Fig. 14 shows BER performance of linear and nonlinear transmit processing schemes for $N_T = N_R = 8$.

The above embodiments demonstrate the inventive approach. It is to be emphasized that the functionalities described with respect to the above embodiments are part of all embodiments.

As has been mentioned above, non-linear Tomlinson-Harashima precoding on flat fading multiple input multiple output channels is an attractive solution in terms of the performance greatly superior to conventional simple linear techniques, while the complexity becomes significantly higher than the linear solutions. We propose two computationally efficient algorithms; optimum and sub-optimum solutions. The complexity required by our reference system is $O(N^4)$. This complexity is reduced to $O(N^3)$ by our proposals. Our optimum solution does not sacrifice the performance. Our sub-optimum solution requires even less complexity than our optimum one with slight performance degradation. The complexity is even equivalent to the simple linear transmission techniques. And the performance degradation against optimum non-linear algorithm is negligible in most cases.

Furthermore, the present invention provides a system with a transmitter and a receiver both equipped with multiple antennas achieving high data rates by spatially multiplexing several data streams. Another attractive system set-up is: one transmitter with multiple antennas is simultaneously serving for decentralized multiple receivers, each of which has a single antenna (no cooperation among receivers).

The present invention provides two computationally efficient approaches: optimum and sub-optimum solutions. Firstly we studied a special filter structure imposed by non-linear signal processing. Both solutions fully make use of this special structure for the efficient filter calculation. Specifically, we apply so-called Cholesky factorisation with symmetric permutation to a Hermitian positive definite matrix. We also studied an optimum precoding ordering strategy, which makes the difference between our optimum and sub-optimum solutions. Our reference system in in M. Joham, J. Brehmer, and W. Utschick, "MMSE Approaches to Multi-User Spatio-Temporal Tomlinson-Harashima Precoding," in Proc. of 5. ITG Conference on Source and Channel Coding, Erlangen, January 2004, pages 387-394, requires $O(N_R^4)$ complexity,

where $N_R$ is the number of antennas or users, while our proposed solutions reduce the complexity to $O(N_R{}^3)$. Our optimum solution performs exactly equivalent to the proposal in in M. Joham, J. Brehmer, and W. Utschick, "MMSE Approaches to Multi-User Spatio-Temporal Tomlinson-Harashima Precoding," in Proc. of 5. ITG Conference on Source and Channel Coding, Erlangen, January 2004, pages 387-394. The performance of our sub-optimum solution slightly degrades comparing to the optimum one, but with the complexity lower than our optimum solution. The complexity is even equivalent to the very simple conventional linear transmission techniques. The performance degradation of our sub-optimum solution is negligible in most cases.

In accordance with the present invention, the computational complexity is reduced, which is a significant advantage for commercial products.

The present invention further provides a processor for determining a permutation scheme, forward filter coefficients and feed-back filter coefficients, the apparatus being configured for iteratively determining the permutation scheme, the feed-back filter coefficients and the forward filter coefficients using a Cholesky factorization of a channel information matrix with symmetric permutations, the symmetric permutations determining the permutation scheme.

The processor has the full functionality as described above. For example, the processor is configured for determining the permutation scheme, the feed-back filter coefficients and the forward filter coefficients to be used by the inventive precoder as described above.

Moreover, depending on certain implementation requirements of the inventive methods, the inventive methods can be implemented in hardware or in software. The implementation can be performed using a digital storage medium, in particular a disk or a CD having electronically readable control signals stored thereon, which can cooperate with a programmable computer system such that the inventive methods are performed. Generally, the present invention is, therefore, a computer program product with a program code stored on a machine-readable carrier, the program code being configured for performing at least one of the inventive methods, when the computer program products runs on a computer. In other words, the inventive methods are, therefore, a computer program having a program code for performing the inventive methods, when the computer program runs on a computer.

## Claims

1. Processor for determining forward filter coefficients and feedback filter coefficients,
   wherein the processor is adapted to perform a factorisation to obtain a unit triangular matrix L and a diagonal matrix D, such that

$$P\Phi P^T = LDL^H;$$

**characterized in that** $\Phi$ is defined as

$$\Phi = HH^H + \frac{N_R}{\gamma} I;$$

wherein P is a permutation matrix;
wherein $\gamma$ is a signal-to-noise ratio;
wherein I denotes a unit matrix;
wherein H is a channel matrix of dimension $N_R \times N_T$;
wherein the processor is adapted to determine a matrix B comprising feedback filter coefficients using the relation

$$B^H = L;$$

wherein the processor is adapted to determine a matrix F comprising forward filter coefficients using the relation

$$F^H = \beta H^H P^T L^{H,-1} D^{-1} \, ;$$

and
wherein β is a factor.

2. Processor according to claim 1, wherein the processor is configured for iteratively determining the feedback filter coefficients and the forward filter coefficients using a factorization of a channel matrix.

3. Precoder for precoding an input sequence having $N_R$ symbols to obtain a transmit sequence having $N_T$ symbols for preventing spatial interferences when transmitting the transmit sequence by $N_T$ transmitting points to a receiving point through $N_T$ different channels, wherein each transmit sequence symbol comprised by the transmit sequence is to be transmitted by a different transmitting point through a different channel, the precoder comprising:

   a permuter (101) for reordering input sequence symbols to obtain a permuted sequence; and
   a predistorter (107) for introducing a compensation interference into the permuted sequence using channel information to obtain the transmit sequence such that spatial interferences are compensated in a received version of a certain transmit sequence symbol,
   wherein the predistorter comprises an adder (303) for adding a feedback sequence to the permuted sequence to obtain an interfered sequence,
   a feedback filter (307) for filtering the interfered sequence to provide the feedback sequence, and
   a forward filter (309) for filtering the interfered sequence to obtain the transmit sequence;
   a processor according to claim 1 or 2, for determining forward filter coefficients used by the forward filter and feedback filter coefficients used by the feedback-filter, in order to adapt the forward filter (309) and the feedback filter (307) to varying channel conditions.

4. The precoder of claim 3, wherein the processor is adapted to determine the matrix B using the algorithm:

$$\Phi = \mathbf{H}\mathbf{H}^H + \frac{N_R}{\gamma} \mathbf{I}$$

$$\mathbf{P} = 1_{N_R}, \mathbf{D} = 0_{N_R}$$

for i=1,...,$N_R$

$$q = \underset{q'=i,...,N_R}{\operatorname{argmin}} \, \Phi(q', q')$$

$\mathbf{P}_i = \mathbf{1}_{NR}$, whose i-th and q-th rows are exchanged

$$\mathbf{P} = \mathbf{P}_i \mathbf{P}$$

$$\Phi = \mathbf{P}_i \Phi \mathbf{P}_i^T$$

$$\mathbf{D}(i,i) = \Phi(i,i)$$

$$\Phi\left(i:N_R,i\right)=\ \Phi\left(i:N_R,i\right)/\mathbf{D}(i,i)$$

$$\Phi\left(i+1:N_R,i+1:N_R\right)=\Phi\left(i+1:N_R,i+1:N_R\right)$$
$$-\Phi\left(i+1:N_R,i\right)\Phi\left(i+1:N_R,i\right)^{H}\mathbf{D}(i,i)$$

**L**=*lower triangular part of* $\Phi$
wherein i designates a variable;
wherein q designates a variable;
wherein q' designates a variable;
wherein $\chi$ is a variable;
wherein $\sigma_v$ designates a variance value of an output signal.

5. Precoder according to claim 3 or 4, wherein the receivable version of the certain transmit signal symbol is a receivable version of a first permuted sequence symbol, wherein the permuter (101) is configured for permuting the input sequence symbol such that the first permuted sequence symbol is the certain input sequence symbol.

6. Precoder according to claim 3, 4 or 5, wherein the permuted sequence comprises N successive permuted sequence symbols, wherein *k-1* permuted sequence symbols are followed by a *k-th* permuted sequence symbol, the *k-th* permuted sequence symbol being followed by *N-k* permuted sequence symbols, wherein the predistorter (107) is configured for interfering the *k-th* permuted sequence symbol using only the *k-1* permuted sequence symbols or for interfering the *k-th* permuted sequence symbol using only the *N-k* permuted sequence symbols.

7. Precoder according to claim 6, wherein the feedback filter (307) is configured for filtering the interfered sequence using different sets of feedback filter coefficients to obtain different feedback sequence symbols.

8. Precoder according to one of claims 3 to 7, wherein the processor is configured for determining the forward filter coefficients and the feedback filter coefficients such that a detection error associated with detecting an input sequence symbol in a receivable version of a first transmit sequence symbol is smaller than a detection error associated with detecting another input sequence symbol in a receivable version of a second transmit sequence symbol.

9. Apparatus according to one of claims 3 to 8, wherein the permuter (101; 301) is configured for performing a first permuting scheme for obtaining a first permuted sequence value, and for permuting a second permuting scheme for obtaining a second permuted sequence value, wherein the feedback filter (307) is configured for filtering the interfered sequence using a first set of feedback filter coefficients for obtaining a first feedback sequence symbol to be added to the first permuted sequence symbol, and for filtering the interleaved sequence using a second set of feedback filter coefficients for obtaining a second feedback sequence symbol to be added to the second permuted sequence symbol, and wherein the forward filter (309) is configured for filtering the interfered sequence using a first set of forward filter coefficients for obtaining a first transmit symbol value, and for filtering the interfered sequence using a second set of forward filter coefficients for obtaining a second transmit sequence symbol, wherein the processor is configured for jointly determining the first permuting scheme, the first set of forward filter coefficients and the first set of feedback filter coefficients such that a detection error associated with detecting an input sequence symbol in a receivable version of the first transmit sequence symbol has a first error value, and for jointly determining the second permuting scheme, the second set of forward filter coefficients and the second set of feedback filter coefficients such that a detection error associated with detecting an input sequence symbol in a receivable version of the second transmit sequence symbol has a second error value, the first error value being greater than the second error value or the second error value being greater than the first error value.

10. Apparatus according to one of claims 3 to 9, wherein the forward filter (309) is a block filter having N successive columns or N successive rows, each column or each row representing a different set of filter coefficients, wherein the forward filter (309) is configured for multiplying the interfered sequence by a first column or a first row to obtain a first transmit sequence symbol, and for multiplying the interfered sequence by a second column or by a second row to obtain a second transmit sequence symbol, wherein the feedback filter (307) has N successive columns or N successive rows, wherein the processor is configured for jointly and successively determining the successive N columns or N rows of the forward filter (309) and the successive N columns or successive N rows of the feedback filter (307) starting with a first column or a first row and ending with a *N-th* column or *N-th* row, or starting with a *N-th* column or *N-th* row and ending with a first column or a first row.

11. Apparatus according to claim 10, wherein the processor is configured for determining the columns or rows of the forward filter (309) and the columns or rows of the feedback filter (307) and a permutation scheme for each row or column of the forward filter (309) iteratively starting with a first column or first row of the forward filter (309) and with a first column or first row of the feedback filter (307) or starting with the *N-th* column or *N-th* row of the forward filter (309) and *N-th* column or *N-th* row of the feedback filter (307), wherein an iteration direction is determined by an error value ratio between a detection error associated with detecting an input sequence symbol in a first transmit sequence symbol and a detection error associated with detecting a further input sequence in a *N-th* transmit sequence symbol.

12. Precoder according to one of claims 3 to 11, wherein the processor is configured for determining the forward filter coefficients and the feedback filter coefficients on a basis of a Cholesky factorization of a channel information matrix.

13. Precoder according to one of claims 3 to 12, wherein the predistorter comprises a limiter (305);
wherein outputs of the adder (303) are coupled to the limiter (305);
wherein outputs of the limiter (305) are coupled to inputs of the feedback filter; and
wherein outputs of the limiter (305) are coupled to inputs of the forward filter.

14. Processor for determining forward filter coefficients and feedback filter coefficients,
wherein the processor is adapted to perform a factorisation to obtain a unit triangular matrix L and a diagonal matrix D, such that

$$P\Phi^{-1}P^T = L^H D L \; ;$$

**characterized in that** $\Phi$ is defined as

$$\Phi = HH^H + \frac{N_R}{\gamma} I \; ;$$

wherein P is a permutation matrix;
wherein $\gamma$ is a signal-to-noise ratio;
wherein I denotes a unit matrix;
wherein H is a channel matrix of dimension $N_R \times N_T$;
wherein the processor is adapted to determine a matrix $B_{opt}$ comprising feedback filter coefficients using the relation

$$B_{opt}^H = L^{-1} \; ;$$

wherein the processor is adapted to determine a matrix $F_{opt}$ comprising forward filter coefficients using the relation

$$F_{opt}^H = \beta H^H P^T L^H D \; ;$$

and
wherein $\beta$ is a factor.

15. The processor according to claim 14, wherein the processor is configured for iteratively determining the feedback filter coefficients and the forward filter coefficients using a factorization of a channel matrix.

**16.** Precoder for precoding an input sequence having $N_R$ symbols to obtain a transmit sequence having $N_T$ symbols for preventing spatial interferences when transmitting the transmit sequence by $N_T$ transmitting points to a receiving point through $N_T$ different channels, wherein each transmit sequence symbol comprised by the transmit sequence is to be transmitted by a different transmitting point through a different channel, the precoder comprising:

a permuter (101) for reordering input sequence symbols to obtain a permuted sequence; and
a predistorter (107) for introducing a compensation interference into the permuted sequence using channel information to obtain the transmit sequence such that spatial interferences are compensated in a received version of a certain transmit sequence symbol,
wherein the predistorter comprises an adder (303) for adding a feedback sequence to the permuted sequence to obtain an interfered sequence,
a feedback filter (307) for filtering the interfered sequence to provide the feedback sequence, and
a forward filter (309) for filtering the interfered sequence to obtain the transmit sequence; and
a processor according to claim 14 or 15, for determining forward filter coefficients used by the forward filter and feedback filter coefficients used by the feedback-filter, in order to adapt the forward filter (309) and the feedback filter (307) to varying channel conditions.

**17.** The precoder of claim 16, wherein the processor is adapted to determine the matrix B using the algorithm:

$$\mathbf{\Phi}^{-1} = \left( \mathbf{HH}^H + \frac{N_R}{\gamma} \mathbf{1} \right)^{-1}$$

$$\mathbf{P} = \mathbf{1}_{N_R}, \mathbf{D} = \mathbf{0}_{N_R}$$

for i=$N_R$,...,1

$$q = \underset{q'=1,\dots,i}{\operatorname{argmin}} \, \mathbf{\Phi}^{-1}(q', q')$$

$\mathbf{P}i = \mathbf{1}_{N_R}$, whose i-th and q-th rows are exchanged

$$\mathbf{P} = \mathbf{P}_i \mathbf{P}$$

$$\mathbf{\Phi}^{-1} = \mathbf{P}_i \mathbf{\Phi}^{-1} \mathbf{P}_i^T$$

$$\mathbf{D}(i,i) = \mathbf{\Phi}^{-1}(i,i)$$

$$\mathbf{\Phi}^{-1}(1:i,i) = \mathbf{\Phi}^{-1}(1:i,i) / \mathbf{D}(i,i)$$

$$\mathbf{\Phi}^{-1}(1:i-1,1:i-1) = \mathbf{\Phi}^{-1}(1:i-1,1:i-1) - \mathbf{\Phi}^{-1}(1:i-1,i)\mathbf{\Phi}^{-1}(1:i-1,i)^H \mathbf{D}(i,i)$$

L = *upper triangular part of* $\Phi^{-1}$

$$\mathbf{B}^H = \mathbf{L}^{-1}, \ \mathbf{F}^H = \mathbf{H}^H \mathbf{P}^T \mathbf{L}^H \mathbf{D}$$

$$\chi = \left\| \mathbf{F}^H(:,1) \right\|_2^2 + \sigma_\upsilon^2 \left\| \mathbf{F}^H(:,2:N_R) \right\|_F^2$$

$$\beta = \sqrt{\mathrm{E}_S / \chi}$$

$$\mathbf{F}^H = \beta \cdot \mathbf{F}^H$$

wherein i designates a variable;
wherein q designates a variable;
wherein q' designates a variable;
wherein $\chi$ is a variable;
wherein $\sigma_v$ designates a variance value of an output signal.

18. Method for determining forward filter coefficients and feedback filter coefficients,
wherein determining the forward filter coefficients and the feedback-filter coefficients comprises performing a factorisation to obtain a unit triangular matrix L and a diagonal matrix D, such that

$$P\Phi P^T \ = \ LDL^H \ ;$$

**characterized in that** $\Phi$ is defined as

$$\Phi \ = \ HH^H \ + \ \frac{N_R}{\gamma} \mathrm{I} \quad ;$$

wherein P is a permutation matrix;
wherein $\gamma$ is a signal-to-noise ratio;
wherein I denotes a unit matrix;
wherein H is a channel matrix of dimesion $N_R$ x $N_T$;
wherein determining a matrix B comprising feedback filter coefficients comprises using the relation

$$B^H \ = L \ ;$$

wherein determining a matrix F comprising forward filter coefficients comprises using the relation

$$F^H = \beta H^H P^T L^{H,-1} D^{-1} ; \ \ \text{and}$$

wherein $\beta$ is a factor.

**19.** The method of claim 18, wherein the method comprises iteratively determining the feedback filter coefficients and the forward-filter coefficients using a factorization of a channel matrix.

**20.** Method for precoding an input sequence having $N_R$ symbols to obtain a transmit sequence having $N_T$ symbols for preventing spatial interferences when transmitting the transmit sequence by $N_T$ transmitting points to a receiving point through $N_T$ different channels, wherein each transmit sequence symbol comprised by the transmit sequence is to be transmitted by a different transmitting point through a different channel, the method comprising:

re-ordering input sequence symbols to obtain a permuted sequence;
introducing a compensation interference into the permuted sequence using channel information to obtain the transmit sequence such that spatial interferences are compensated in a received version of a certain transmit sequence symbol,
wherein introducing a compensation interference comprises adding a feedback sequence to the permuted sequence to obtain an interfered sequence,
filtering, using a feedback filter, the interfered sequence to provide the feedback sequence, and
filtering, using a forward filter, the interfered sequence to obtain the transmit sequence;
determining forward filter coefficients used by the forward filter and feedback filter coefficients used by the feedback-filter according to claim 18 or claim 19, in order to adapt the forward filter (309) and the feedback filter (307) to varying channel conditions.

**21.** Method for determining forward filter coefficients and feedback filter coefficients,
wherein determining the forward filter coefficients and the feedback-filter coefficients comprises performing a factorisation to obtain a unit triangular matrix L and a diagonal matrix D, such that

$$P\Phi^{-1}P^T = L^H DL \; ;$$

**characterized in that** $\Phi$ is defined as

$$\Phi \;=\; HH^H \;+\; \frac{N_R}{\gamma}\,\mathbb{I} \;\; ;$$

wherein P is a permutation matrix;
wherein $\gamma$ is a signal-to-noise ratio;
wherein I denotes a unit matrix;
wherein H is a channel matrix of dimension $N_R$x$N_T$;
wherein determining a matrix $B_{opt}$ comprising feedback filter coefficients comprises using the relation

$$B_{opt}^H = L^{-1} \; ;$$

wherein determining a matrix $F_{opt}$ comprising forward filter coefficients comprises using the relation

$$F_{opt}^H = \beta H^H P^T L^H D \; ;$$

and
wherein $\beta$ is a factor.

**22.** The method of claim 21, wherein the method comprises iteratively determining the feedback filter coefficients and the forward-filter coefficients using a factorization of a channel matrix.

**23.** Method for precoding an input sequence having $N_R$ symbols to obtain a transmit sequence having $N_T$ symbols for preventing spatial interferences when transmitting the transmit sequence by $N_T$ transmitting points to a receiving point through $N_T$ different channels, wherein each transmit sequence symbol comprised by the transmit sequence is to be transmitted by a different transmitting point through a different channel, the method comprising:

re-ordering input sequence symbols to obtain a permuted sequence;
introducing a compensation interference into the permuted sequence using channel information to obtain the transmit sequence such that spatial interferences are compensated in a received version of a certain transmit sequence symbol,
wherein introducing a compensation interference comprises adding a feedback sequence to the permuted sequence to obtain an interfered sequence,
filtering, using a feedback filter, the interfered sequence to provide the feedback sequence, and
filtering, using a forward filter, the interfered sequence to obtain the transmit sequence; and
determining forward filter coefficients used by the forward filter and feedback filter coefficients used by the feedback-filter according to claim 21 or 22, in order to adapt the forward filter (309) and the feedback filter (307) to varying channel conditions.

**24.** Computer program for performing the method of one of claims 18 to 23, when the computer program runs on a computer.

**Patentansprüche**

**1.** Prozessor zum Bestimmen von Vorwärtsfilterkoeffizienten und Rückkopplungsfilterkoeffizienten,
wobei der Prozessor angepasst ist, um eine Faktorisierung durchzuführen, um eine Einheitsdreiecksmatrix L und eine Diagonalmatrix D zu erhalten, derart, dass

$$\mathbf{P \Phi P^T \ = \ LDL^H};$$

**gekennzeichnet dadurch, dass** $\Phi$ definiert ist als

$$\Phi \ = \ \mathbf{HH^H} + \frac{N_R}{\gamma} \mathbf{I};$$

wobei P eine Permutationsmatrix ist;
wobei $\gamma$ ein Signal/Rausch-Verhältnis ist;
wobei I eine Einheitsmatrix bezeichnet;
wobei H eine Kanalmatrix einer Dimension $N_R$ x $N_T$ ist;
wobei der Prozessor angepasst ist, um eine Matrix B zu bestimmen, die Rückkopplungsfilterkoeffizienten aufweist, unter Verwendung der Beziehung

$$\mathbf{B^H \ = \ L};$$

wobei der Prozessor angepasst ist, um eine Matrix F zu bestimmen, die Vorwärtsfilterkoeffizienten aufweist, unter Verwendung der Beziehung

$$\mathbf{F^H \ = \ \beta H^H P^T L^{H,-1} D^{-1}};$$

und

wobei β ein Faktor ist.

2. Prozessor gemäß Anspruch 1, bei dem der Prozessor zum iterativen Bestimmen der Rückkopplungsfilterkoeffizienten und der Vorwärtsfilterkoeffizienten unter Verwendung einer Faktorisierung einer Kanalmatrix konfiguriert ist.

3. Vorcodierer zum Vorcodieren einer Eingangssequenz mit $N_R$ Symbolen, um eine Sendesequenz mit $N_T$ Symbolen zum Verhindern räumlicher Interferenzen zu erhalten, wenn die Sendesequenz durch $N_T$ Sendepunkte durch $N_T$ unterschiedliche Kanäle an einen Empfangspunkt gesendet wird, wobei jedes Sendesequenzsymbol, das in der Sendesequenz enthalten ist, durch einen anderen Sendepunkt durch einen anderen Kanal zu senden ist, wobei der Vorcodierer folgende Merkmale aufweist:

einen Permutierer (101) zum Umsortieren von Eingangssequenzsymbolen, um eine permutierte Sequenz zu erhalten; und
einen Vorverzerrer (107) zum Einbringen einer Kompensationsinterferenz in die permutierte Sequenz unter Verwendung einer Kanalinformation, um die Sendesequenz zu erhalten, derart, dass räumliche Interferenzen in einer empfangenen Version eines gewissen Sendesequenzsymbols kompensiert sind,
wobei der Vorverzerrer einen Addierer (303) zum Addieren einer Rückkopplungssequenz zu der permutierten Sequenz aufweist, um eine interferierte Sequenz zu erhalten,
ein Rückkopplungsfilter (307) zum Filtern der interferierten Sequenz, um die Rückkopplungssequenz bereitzustellen, und
ein Vorwärtsfilter (309) zum Filtern der interferierten Sequenz, um die Sendesequenz zu erhalten;
einen Prozessor gemäß Anspruch 1 oder 2, zum Bestimmen von durch das Vorwärtsfilter verwendeten Vorwärtsfilterkoeffizienten und von durch das Rückkopplungsfilter verwendeten Rückkopplungsfilterkoeffizienten, um das Vorwärtsfilter (309) und das Rückkopplungsfilter (307) an variierende Kanalzustände anzupassen.

4. Der Vorcodierer gemäß Anspruch 3, bei dem der Prozessor angepasst ist, um die Matrix B unter Verwendung des folgenden Algorithmus zu bestimmen:

$$\Phi = \mathbf{H}\mathbf{H}^H + \frac{N_R}{\gamma}\mathbf{I};$$

$$P = 1_{N_R}, \mathbf{D} = 0_{N_R}$$

für i = 1, ... , $N_R$

$$q = \operatorname*{argmin}_{q'=i,...,N_R} \Phi(q', q')$$

$\mathbf{P}_i = \mathbf{1}_{N_R}$ , wobei die i-te und q-te Zeile vertauscht sind

$$\mathbf{P} = \mathbf{P}_i\mathbf{P}$$

$$\Phi = \mathbf{P}_i\Phi\mathbf{P}_i^T$$

$$\mathbf{D}(i, i) = \Phi(i, i)$$

$$\Phi\big(i \ : \ N_R, \ i\big) \ = \ \ \Phi\big(i \ : \ N_R, \ i\big) / \mathbf{D}\big(i, i\big)$$

$$\Phi\big(i + 1 \ : \ N_R, i + 1 \ : \ N_R\big) \ = \ \Phi\big(i + 1 \ : \ N_R, i + 1 \ : \ N_R\big)$$

$$- \ \Phi\big(i + 1 \ : \ N_R, i\big)\Phi\big(i + 1 \ : \ N_R, i\big)^H \mathbf{D}\big(i, i\big)$$

L = niedrigerer Dreiecksteil von $\Phi$

$$\mathbf{B}^H \ = \ \mathbf{L} \ , \ \mathbf{F}^H \ = \ \mathbf{H}^H \mathbf{P}^T \mathbf{L}^{H,-1} \mathbf{D}^{-1}$$

$$\chi \ = \ \big\| \mathbf{F}^H\big(:, 1\big) \big\|_2^2 \ + \ \sigma_\upsilon^2 \ \big\| \mathbf{F}^H\big(:, 2 \ : \ N_R\big) \big\|_F^2$$

$$\beta \ = \ \sqrt{E_s / \chi}$$

$$\mathbf{F}^H \ = \ \beta \cdot \mathbf{F}^H$$

wobei i eine Variable bezeichnet;
wobei q eine Variable bezeichnet;
wobei q' eine Variable bezeichnet;
wobei $\chi$ eine Variable ist;
wobei $\sigma_v$ einen Abweichungswert eines Ausgangssignals bezeichnet.

5. Vorcodierer gemäß Anspruch 3 oder 4, bei dem die empfangbare Version des gewissen Sendesignalsymbols eine empfangbare Version eines ersten permutierten Sequenzsymbols ist, wobei der Permutierer (101) zum Permutieren des Eingangssequenzsymbols konfiguriert ist, derart, dass das erste permutierte Sequenzsymbol das gewisse Eingangssequenzsymbol ist.

6. Vorcodierer gemäß Anspruch 3, 4 oder 5, bei dem die permutierte Sequenz N aufeinander folgende permutierte Sequenzsymbole aufweist, wobei k-1 permutierte Sequenzsymbole von einem k-ten permutierten Sequenzsymbol gefolgt sind, wobei das k-te permutierte Sequenzsymbol von N-k permutierten Sequenzsymbolen gefolgt ist, wobei der Vorverzerrer (107) zum Interferieren des k-ten permutierten Sequenzsymbols unter Verwendung lediglich der k-1 permutierten Sequenzsymbole oder zum Interferieren des k-ten permutierten Sequenzsymbols unter Verwendung lediglich der N-k permutierten Sequenzsymbole konfiguriert ist.

7. Vorcodierer gemäß Anspruch 6, bei dem das Rückkopplungsfilter (307) zum Filtern der interferierten Sequenz unter Verwendung unterschiedlicher Sätze von Rückkopplungsfilterkoeffizienten konfiguriert ist, um unterschiedliche Rückkopplungssequenzsymbole zu erhalten.

8. Vorcodierer gemäß einem der Ansprüche 3 bis 7, bei dem der Prozessor zum Bestimmen der Vorwärtsfilterkoeffizienten und der Rückkopplungsfilterkoeffizienten konfiguriert ist, derart, dass ein Erfassungsfehler, der einem Erfassen eines Eingangssequenzsymbols in einer empfangbaren Version eines ersten Sendesequenzsymbols zugeordnet ist, kleiner ist als ein Erfassungsfehler, der einem Erfassen eines weiteren Eingangssequenzsymbols in einer empfangbaren Version eines zweiten Sendesequenzsymbols zugeordnet ist.

**EP 1 782 554 B1**

9. Vorrichtung gemäß einem der Ansprüche 3 bis 8, bei der der Permutierer (101; 301) zum Durchführen eines ersten Permutierungsschemas zum Erhalten eines ersten permutierten Sequenzwerts und zum Permutieren eines zweiten Permutierungsschemas zum Erhalten eines zweiten permutierten Sequenzwerts konfiguriert ist, wobei das Rückkopplungsfilter (307) zum Filtern der interferierten Sequenz unter Verwendung eines ersten Satzes von Rückkopplungsfiltern Koeffizienten zum Erhalten eines ersten Rückkopplungssequenzsymbols, das zu dem ersten permutierten Sequenzsymbol hinzuzuaddieren ist, und zum Filtern der verschachtelten Sequenz unter Verwendung eines zweiten Satzes von Rückkopplungsfilterkoeffizienten zum Erhalten eines zweiten Rückkopplungssequenzsymbols, das zu dem zweiten permutierten Sequenzsymbol hinzuzuaddieren ist, konfiguriert ist, und wobei das Vorwärtsfilter (309) zum Filtern der interferierten Sequenz unter Verwendung eines ersten Satzes von Vorwärtsfilterkoeffizienten zum Erhalten eines ersten Sendesymbolwerts und zum Filtern der interferierten Sequenz unter Verwendung eines zweiten Satzes von Vorwärtsfilterkoeffizienten zum Erhalten eines zweiten Sendesequenzsymbols konfiguriert ist, wobei der Prozessor zum gemeinsamen Bestimmen des ersten Permutierungsschemas, des ersten Satzes von Vorwärtsfilterkoeffizienten und des ersten Satzes von Rückkopplungsfilterkoeffizienten konfiguriert ist, derart, dass ein Erfassungsfehler, der einem Erfassen eines Eingangssequenzsymbols in einer empfangbaren Version des ersten Sendesequenzsymbols zugeordnet ist, einen ersten Fehlerwert aufweist, und zum gemeinsamen Bestimmen des zweiten Permutierungsschemas, des zweiten Satzes von Vorwärtsfilterkoeffizienten und des zweiten Satzes von Rückkopplungsfilterkoeffizienten konfiguriert ist, derart, dass ein Erfassungsfehler, der einem Erfassen eines Eingangssequenzsymbols in einer empfangbaren Version des zweiten Sendesequenzsymbols zugeordnet ist, einen zweiten Fehlerwert aufweist, wobei der erste Fehlerwert größer als der zweite Fehlerwert oder der zweite Fehlerwert größer als der erste Fehlerwert ist.

10. Vorrichtung gemäß einem der Ansprüche 3 bis 9, bei der das Vorwärtsfilter (309) ein Blockfilter mit N aufeinander folgenden Spalten oder N aufeinander folgenden Zeilen ist, wobei jede Spalte oder jede Zeile einen anderen Satz von Filterkoeffizienten darstellt, wobei das Vorwärtsfilter (309) zum Multiplizieren der interferierten Sequenz mit einer ersten Spalte oder einer ersten Zeile konfiguriert ist, um ein erstes Sendesequenzsymbol zu erhalten, und zum Multiplizieren der interferierten Sequenz mit einer zweiten Spalte oder einer zweiten Zeile konfiguriert ist, um ein zweites Sendesequenzsymbol zu erhalten, wobei das Rückkopplungsfilter (307) N aufeinander folgende Spalten oder N aufeinander folgende Zeilen aufweist, wobei der Prozessor zum gemeinsamen und aufeinander folgenden Bestimmen der aufeinander folgenden N Spalten oder N Zeilen des Vorwärtsfilters (309) und der aufeinander folgenden N Spalten oder der aufeinander folgenden N Zeilen des Rückkopplungsfilters (307), beginnend mit einer ersten Spalte oder einer ersten Zeile und endend mit einer N-ten Spalte oder N-ten Zeile oder beginnend mit einer N-ten Spalte oder N-ten Zeile und endend mit einer ersten Spalte oder einer ersten Zeile, konfiguriert ist.

11. Vorrichtung gemäß Anspruch 10, bei der der Prozessor zum Bestimmen der Spalten oder Zeilen des Vorwärtsfilters (309) und der Spalten oder Zeilen des Rückkopplungsfilters (307) und eines Permutierungsschemas für jede Zeile oder Spalte des Vorwärtsfilters (309), das iterativ mit einer ersten Spalte oder einer ersten Zeile des Vorwärtsfilters (309) und mit einer ersten Spalte oder einer ersten Zeile des Rückkopplungsfilters (307) beginnt oder mit der N-ten Spalte oder N-ten Zeile des Vorwärtsfilters (309) und der N-ten Spalte oder N-ten Zeile des Rückkopplungsfilters (307) beginnt, konfiguriert ist, wobei eine Iterationsrichtung durch ein Fehlerwertverhältnis zwischen einem Erfassungsfehler, der einem Erfassen eines Eingangssequenzsymbols in einem ersten Sendesequenzsymbol zugeordnet ist, und einem Erfassungsfehler, der einem Erfassen einer weiteren Eingangssequenz in einem N-ten Sendesequenzsymbol zugeordnet ist, bestimmt ist.

12. Vorcodierer gemäß einem der Ansprüche 3 bis 11, bei dem der Prozessor zum Bestimmen der Vorwärtsfilterkoeffizienten und der Rückkopplungsfilterkoeffizienten auf einer Basis einer Cholesky-Faktorisierung einer Kanalinformationsmatrix konfiguriert ist.

13. Vorcodierer gemäß einem der Ansprüche 3 bis 12, bei dem der Vorverzerrer einen Begrenzer (305) aufweist;
wobei Ausgänge des Addierers (303) mit dem Begrenzer (305) gekoppelt sind;
wobei Ausgänge des Begrenzers (305) mit Eingängen des Rückkopplungsfilters gekoppelt sind; und
wobei Ausgänge des Begrenzers (305) mit Eingängen des Vorwärtsfilters gekoppelt sind.

14. Prozessor zum Bestimmen von Vorwärtsfilterkoeffizienten und Rückkopplungsfilterkoeffizienten,
wobei der Prozessor angepasst ist, um eine Faktorisierung durchzuführen, um eine Einheitsdreiecksmatrix L und eine Diagonalmatrix D zu erhalten, derart, dass

**24**

$$P\Phi^{-1}P^{T} = L^{H}DL ;$$

**gekennzeichnet dadurch, dass** $\Phi$ definiert ist als

$$\Phi = HH^{H} + \frac{N_{R}}{\gamma}\mathbf{I} ;$$

wobei P eine Permutationsmatrix ist;
wobei $\gamma$ ein Signal/Rausch-Verhältnis ist;
wobei I eine Einheitsmatrix bezeichnet;
wobei H eine Kanalmatrix einer Dimension $N_R$ x $N_T$ ist;
wobei der Prozessor angepasst ist, um eine Matrix $B_{opt}$ zu bestimmen, die Rückkopplungsfilterkoeffizienten aufweist, unter Verwendung der Beziehung

$$B_{opt}^{H} = L^{-1} ;$$

wobei der Prozessor angepasst ist, um eine Matrix $F_{opt}$ zu bestimmen, die Vorwärtsfilterkoeffizienten aufweist, unter Verwendung der Beziehung

$$F_{opt}^{H} = \beta H^{H}P^{T}L^{H}D ; \text{ und}$$

wobei $\beta$ ein Faktor ist.

15. Prozessor gemäß Anspruch 14, wobei der Prozessor zum iterativen Bestimmen der Rückkopplungsfilterkoeffizienten und der Vorwärtsfilterkoeffizienten unter Verwendung einer Faktorisierung einer Kanalmatrix konfiguriert ist.

16. Vorcodierer zum Vorcodieren einer Eingangssequenz mit $N_R$ Symbolen zum Erhalten einer Sendesequenz mit $N_T$ Symbolen zum Verhindern räumlicher Interferenzen, wenn die Sendesequenz durch $N_T$ Sendepunkte durch $N_T$ unterschiedliche Kanäle an einen Empfangspunkt gesendet wird, wobei jedes Sendesequenzsymbol, das in der Sendesequenz enthalten ist, durch einen anderen Sendepunkt durch einen anderen Kanal zu senden ist, wobei der Vorcodierer folgende Merkmale aufweist:

einen Permutierer (101) zum Umsortieren von Eingangssequenzsymbolen, um eine permutierte Sequenz zu erhalten; und
einen Vorverzerrer (107) zum Einbringen einer Kompensationsinterferenz in die permutierte Sequenz unter Verwendung einer Kanalinformation, um die Sendesequenz zu erhalten, derart, dass räumliche Interferenzen in einer empfangenen Version eines gewissen Sendesequenzsymbols kompensiert sind,
wobei der Vorverzerrer einen Addierer (303) zum Addieren einer Rückkopplungssequenz zu der permutierten Sequenz aufweist, um eine interferierte Sequenz zu erhalten,
ein Rückkopplungsfilter (307) zum Filtern der interferierten Sequenz, um die Rückkopplungssequenz bereitzustellen, und
ein Vorwärtsfilter (309) zum Filtern der interferierten Sequenz, um die Sendesequenz zu erhalten; und
einen Prozessor gemäß Anspruch 14 oder 15, zum Bestimmen von durch das Vorwärtsfilter verwendeten Vorwärtsfilterkoeffizienten und von durch das Rückkopplungsfilter verwendeten Rückkopplungsfilterkoeffizienten, um das Vorwärtsfilter (309) und das Rückkopplungsfilter (307) an variierende Kanalzustände anzupassen.

17. Der Vorcodierer gemäß Anspruch 16, bei dem der Prozessor angepasst ist, um die Matrix B unter Verwendung des folgenden Algorithmus zu bestimmen:

$$\Phi^{-1} = \left( \mathbf{HH}^{H} + \frac{N_R}{\gamma} 1 \right)^{-1}$$

$$\mathbf{P} = \mathbf{1}_{N_R}, \mathbf{D} = 0_{N_R}$$

für i = $N_R$,...,1

$$q = \underset{q'=1,\ldots,i}{\arg\min} \, \Phi^{-1}(q', q')$$

$\mathbf{P}_i = \mathbf{1}_{N_R}$, wobei i-te und q-te Zeile vertauscht sind

$$\mathbf{P} = \mathbf{P}_i \mathbf{P}$$

$$\Phi^{-1} = \mathbf{P}_i \Phi^{-1} \mathbf{P}_i^{T}$$

$$\mathbf{D}(i, i) = \Phi^{-1}(i, i)$$

$$\Phi^{-1}(1 : i, i) = \Phi^{-1}(1 : i, i) / \mathbf{D}(i, i)$$

$$\Phi^{-1}(1 : i - 1, 1 : i - 1) = \Phi^{-1}(1 : i - 1, 1 : i - 1)$$
$$- \Phi^{-1}(1 : i - 1, i) \Phi^{-1}(1 : i - 1, i)^{H} \mathbf{D}(i, i)$$

$\mathbf{L}$ = oberer Dreiecksteil von $\Phi^{-1}$

$$\mathbf{B}^{H} = \mathbf{L}^{-1}, \quad \mathbf{F}^{H} = \mathbf{H}^{H} \mathbf{P}^{T} \mathbf{L}^{H} \mathbf{D}$$

$$\chi = \left\| \mathbf{F}^{H}(:,1) \right\|_2^2 + \sigma_v^2 \left\| \mathbf{F}^{H}(:, 2 : N_R) \right\|_F^2$$

$$\beta = \sqrt{E_S / \chi}$$

$$\mathbf{F}^{H} = \beta \cdot \mathbf{F}^{H}$$

wobei i eine Variable bezeichnet;
wobei q eine Variable bezeichnet;
wobei q' eine Variable bezeichnet;
wobei $\chi$ eine Variable ist;
wobei $\sigma_v$ einen Varianzwert eines Ausgangssignals bezeichnet.

**18.** Verfahren zum Bestimmen von Vorwärtsfilterkoeffizienten und Rückkopplungsfilterkoeffizienten,
wobei das Bestimmen der Vorwärtsfilterkoeffizienten und der Rückkopplungsfilterkoeffizienten ein Durchführen einer Faktorisierung aufweist, um eine Einheitsdreiecksmatrix L und eine Diagonalmatrix D zu erhalten, derart, dass

$$P\Phi P^{T} = LDL^{H};$$

**gekennzeichnet dadurch, dass** $\Phi$ definiert ist als

$$\Phi = HH^{H} + \frac{N_{R}}{\gamma}\mathbf{I};$$

wobei P eine Permutationsmatrix ist;
wobei $\gamma$ ein Signal/Rausch-Verhältnis ist;
wobei I eine Einheitsmatrix bezeichnet;
wobei H eine Kanalmatrix einer Dimension $N_R$ x $N_T$ ist;
wobei ein Bestimmen einer Matrix B, die Rückkopplungsfilterkoeffizienten aufweist, ein Verwenden der Beziehung

$$B^{H} = L$$

aufweist
wobei ein Bestimmen einer Matrix F, die Vorwärtsfilterkoeffizienten aufweist, ein Verwenden der Beziehung

$$F^{H} = \beta H^{H}P^{T}L^{H,-1}D^{-1}$$

aufweist; und
wobei $\beta$ ein Faktor ist.

**19.** Das Verfahren gemäß Anspruch 18, wobei das Verfahren ein iteratives Bestimmen der Rückkopplungsfilterkoeffizienten und der Vorwärtsfilterkoeffizienten unter Verwendung einer Faktorisierung einer Kanalmatrix aufweist.

**20.** Verfahren zum Vorcodieren einer Eingangssequenz mit $N_R$ Symbolen zum Erhalten einer Sendesequenz mit $N_T$ Symbolen zum Verhindern räumlicher Interferenzen, wenn die Sendesequenz durch $N_T$ Sendepunkte durch $N_T$ unterschiedliche Kanäle an einen Empfangspunkt gesendet wird, wobei jedes Sendesequenzsymbol, das in der Sendesequenz enthalten ist, durch einen anderen Sendepunkt durch einen anderen Kanal zu senden ist, wobei das Verfahren folgende Schritte aufweist:

Umsortieren der Eingangssequenzsymbole, um eine permutierte Sequenz zu erhalten; und
Einbringen einer Kompensationsinterferenz in die permutierte Sequenz unter Verwendung einer Kanalinformation, um die Sendesequenz zu erhalten, derart, dass räumliche Interferenzen in einer empfangenen Version eines gewissen Sendesequenzsymbols kompensiert sind,
wobei das Einbringen einer Kompensationsinterferenz ein Addieren einer Rückkopplungssequenz zu der permutierten Sequenz aufweist, um eine interferierte Sequenz zu erhalten,
Filtern der interferierten Sequenz unter Verwendung eines Rückkopplungsfilters, um die Rückkopplungssequenz bereitzustellen, und
Filtern der interferierten Sequenz unter Verwendung eines Vorwärtsfilters, um die Sendesequenz zu erhalten;
Bestimmen von durch das Vorwärtsfilter verwendeten Vorwärtsfilterkoeffizienten und von durch das Rückkopplungsfilter verwendeten Rückkopplungsfilterkoeffizienten gemäß Anspruch 18 oder Anspruch 19, um das Vorwärtsfilter (309) und das Rückkopplungsfilter (307) an variierende Kanalzustände anzupassen.

21. Verfahren zum Bestimmen von Vorwärtsfilterkoeffizienten und Rückkopplungsfilterkoeffizienten,
wobei das Bestimmen der Vorwärtsfilterkoeffizienten und der Rückkopplungsfilterkoeffizienten ein Durchführen einer Faktorisierung aufweist, um eine Einheitsdreiecksmatrix L und eine Diagonalmatrix D zu erhalten, derart, dass

$$P\Phi^{-1}P^{T} = L^{H}DL \; ;$$

**gekennzeichnet dadurch, dass** $\Phi$ definiert ist als

$$\Phi = HH^{H} + \frac{N_{R}}{\gamma} \mathbf{I} ;$$

wobei P eine Permutationsmatrix ist;
wobei $\gamma$ ein Signal/Rausch-Verhältnis ist;
wobei I eine Einheitsmatrix bezeichnet;
wobei H eine Kanalmatrix einer Dimension $N_{R} \times N_{T}$ ist;
wobei ein Bestimmen einer Matrix $B_{opt}$, die Rückkopplungsfilterkoeffizienten aufweist, ein Verwenden der Beziehung

$$B_{opt}^{H} = L^{-1}$$

aufweist;
wobei ein Bestimmen einer Matrix $F_{opt}$, die Vorwärtsfilterkoeffizienten aufweist, ein Verwenden der Beziehung

$$F_{opt}^{H} = \beta H^{H}P^{T}L^{H}D$$

aufweist; und
wobei $\beta$ ein Faktor ist.

22. Das Verfahren gemäß Anspruch 21, wobei das Verfahren ein iteratives Bestimmen der Rückkopplungsfilterkoeffizienten und der Vorwärtsfilterkoeffizienten unter Verwendung einer Faktorisierung einer Kanalmatrix aufweist.

23. Verfahren zum Vorcodieren einer Eingangssequenz mit $N_{R}$ Symbolen zum Erhalten einer Sendesequenz mit $N_{T}$ Symbolen zum Verhindern räumlicher Interferenzen, wenn die Sendesequenz durch $N_{T}$ Sendepunkte durch $N_{T}$ unterschiedliche Kanäle an einen Empfangspunkt gesendet wird, wobei jedes Sendesequenzsymbol, das in der Sendesequenz enthalten ist, durch einen anderen Sendepunkt durch einen anderen Kanal zu senden ist, wobei das Verfahren folgende Schritte aufweist:

Umsortieren von Eingangssequenzsymbolen, um eine permutierte Sequenz zu erhalten; und
Einbringen einer Kompensationsinterferenz in die permutierte Sequenz unter Verwendung einer Kanalinformation, um die Sendesequenz zu erhalten, derart, dass räumliche Interferenzen in einer empfangenen Version eines gewissen Sendesequenzsymbols kompensiert sind,

wobei das Einbringen einer Kompensationsinterferenz ein Addieren einer Rückkopplungssequenz zu der permutierten Sequenz aufweist, um eine interferierte Sequenz zu erhalten,

Filtern der interferierten Sequenz unter Verwendung eines Rückkopplungsfilters, um die Rückkopplungssequenz bereitzustellen, und

Filtern der interferierten Sequenz unter Verwendung eines Vorwärtsfilters, um die Sendesequenz zu erhalten; und

Bestimmen von durch das Vorwärtsfilter verwendeten Vorwärtsfilterkoeffizienten und von durch das Rückkopplungsfilter verwendeten Rückkopplungsfilterkoeffizienten gemäß Anspruch 21 oder 22, um das Vorwärtsfilter (309) und das Rückkopplungsfilter (307) an variierende Kanalzustände anzupassen.

**24.** Computerprogramm zum Durchführen des Verfahrens gemäß einem der Ansprüche 18 bis 23, wenn das Computerprogramm auf einem Computer abläuft.

**Revendications**

**1.** Processeur pour déterminer les coefficients de filtre directs et les coefficients de filtre de rétroaction, dans lequel le processeur est adapté pour effectuer une factorisation, pour obtenir une matrice triangulaire unitaire L et une matrice diagonale D, de sorte que

$$P\Phi P^T = LDL^H;$$

**caractérisé par le fait que** $\Phi$ est défini comme étant

$$\Phi = HH^H + \frac{N_R}{\gamma}T\,;$$

où P est une matrice de permutation;
où $\gamma$ est un rapport signal / bruit;
où I désigne une matrice unitaire;
où H est une matrice de canal de dimension $N_R$ x $N_T$;
dans lequel le processeur est adapté pour déterminer une matrice B comprenant des coefficients de filtre de rétroaction à l'aide du rapport

$$B^H = L;$$

dans lequel le processeur est adapté pour déterminer une matrice F comprenant des coefficients de filtre directs à l'aide du rapport

$$F^H = \beta H^H P^T L^{H,-1} D^{-1};$$

et
dans lequel $\beta$ est un facteur.

**2.** Processeur selon la revendication 1, dans lequel le processeur est configuré pour déterminer de manière itérative les coefficients de filtre de rétroaction et les coefficients de filtre directs à l'aide d'une factorisation d'une matrice de canal.

**3.** Précodeur pour précoder une séquence d'entrée ayant $N_R$ symboles, pour obtenir une séquence de transmission ayant $N_T$ symboles, pour empêcher des interférences spatiales lors de la transmission de la séquence de transmission par $N_T$ points de transmission à un point de réception par $N_T$ canaux différents, dans lequel chaque symbole de séquence de transmission que comprend la séquence de transmission doit être transmis par un point de transmission différent via un canal différent, le précodeur comprenant:

un permutateur (101) destiné à réordonner les symboles de la séquence d'entrée, pour obtenir une séquence permutée; et
un prédistorsionneur (107) destiné à introduire une interférence de compensation dans la séquence permutée à l'aide des informations de canal, pour obtenir la séquence de transmission de sorte que les interférences spatiales soient compensées dans une version reçue d'un certain symbole de la séquence de transmission,
dans lequel le prédistorsionneur comprend un additionneur (303) destiné à additionner une séquence de rétroaction à la séquence permutée, pour obtenir une séquence interférée,
un filtre de rétroaction (307) destiné à filtrer la séquence interférée, pour fournir la séquence de rétroaction, et
un filtre direct (309) destiné à filtrer la séquence interférée, pour obtenir la séquence de transmission;
un processeur selon la revendication 1 ou 2, pour déterminer les coefficients de filtre direct utilisés par le filtre direct et les coefficients de filtre de rétroaction utilisés par le filtre de rétroaction, pour adapter le filtre direct (309) et le filtre de rétroaction (307) aux états de canal variables.

4. Précodeur selon la revendication 3, dans lequel le processeur est adapté pour déterminer la matrice B à l'aide de l'algorithme:

$$\Phi = HH^H + \frac{N_R}{\gamma} I$$

$$P = 1_{N_a}, \, D = 0_{N_a}$$

pour $i = 1,...,N_R$

$$q = \underset{q'=i,...,N_R}{\arg\min} \Phi(q', q')$$

$P_i = 1_{N_R}$ dont les i-ième et q-ième rangées sont échangées

$$P = P_i P$$

$$\Phi = P_i \Phi P_i^T$$

$$D(i,i) = \Phi(i,i)$$

$$\Phi(i : N_R, i) = \Phi(i : N_R, i) / D(i,i)$$

$$\Phi(i+1 : N_R, i+1 : N_R) = \Phi(i+1 : N_R, i+1 : N_R)$$
$$- \Phi(i+1 : N_R, i)\Phi(i+1 : N_R, i)^H D(i,i)$$

$L = $ *partie triangulaire* inférieure *de* $\Phi$

$$B^H = L, F^H = H^H P^T L^{H,-1} D^{-1}$$

$$\chi = \left\| F^H(:,1) \right\|_2^2 + \sigma_\nu^2 \left\| F^H(:,2:N_R) \right\|_F^2$$

$$\beta = \sqrt{E_s / \chi}$$

$$F^H = \beta \cdot F^H$$

où i désigne une variable;
où q désigne une variable;
où q' désigne une variable;
où $\chi$ est une variable;
où $\sigma_\nu$ désigne une valeur de variance d'un signal de sortie.

**5.** Précodeur selon la revendication 3 ou 4, dans lequel la version recevable du certain symbole de signal de transmission est une version recevable d'un premier symbole de séquence permutée, dans lequel le permutateur (101) est configuré pour permuter le symbole de séquence d'entrée de sorte que le premier symbole de séquence permutée soit le certain symbole de séquence d'entrée.

**6.** Précodeur selon la revendication 3, 4 ou 5, dans lequel la séquence permutée comprend N symboles de séquence permutée successifs, dans lequel *k*-1 symboles de séquence permutée sont suivis d'un *k*-ième symbole de séquence permutée, le *k*-ième symbole de séquence permutée étant suivi de *N-k* symboles de séquence permutée, dans lequel le prédistorsionneur (107) est configuré pour interférer avec le *k*-ième symbole de séquence permutée uniquement à l'aide de *k-1* symboles de séquence permutée ou pour interférer avec le *k*-ième symbole de séquence permutée uniquement à l'aide des *N-k* symboles de séquence permutée.

**7.** Précodeur selon la revendication 6, dans lequel le filtre de rétroaction (307) est configuré pour filtrer la séquence interférée à l'aide de différents ensembles de coefficients de filtre de rétroaction, pour obtenir différents symboles de séquence de rétroaction.

**8.** Précodeur selon l'une des revendications 3 à 7, dans lequel le processeur est configuré pour déterminer les coefficients de filtre directs et les coefficients de filtre de rétroaction de sorte qu'une erreur de détection associée à la détection d'un symbole de séquence d'entrée dans une version recevable d'un premier symbole de séquence de transmission soit plus petite qu'une erreur de détection associée à la détection d'un autre symbole de séquence d'entrée dans une version recevable d'un deuxième symbole de séquence de transmission.

**9.** Appareil selon l'une des revendications 3 à 8, dans lequel le permutateur (101; 301) est configuré pour exécuter un premier schéma de permutation, pour obtenir une première valeur de séquence permutée, et pour permuter un deuxième schéma de permutation, pour obtenir une deuxième valeur de séquence permutée, dans lequel le filtre de rétroaction (307) est configuré pour filtrer la séquence interférée à l'aide d'un premier ensemble de coefficients de filtre de rétroaction, pour obtenir un premier symbole de séquence de rétroaction à additionner au premier symbole de séquence permutée, et pour filtrer la séquence entremêlée à l'aide d'un deuxième ensemble de coefficients de filtre de rétroaction, pour obtenir un deuxième symbole de séquence de rétroaction à additionner au deuxième symbole de séquence permutée, et dans lequel le filtre direct (309) est configuré pour filtrer la séquence interférée à l'aide d'un premier ensemble de coefficients de filtre direct, pour obtenir une première valeur de symbole de transmission, et pour filtrer la séquence interférée à l'aide d'un deuxième ensemble de coefficients de filtre direct, pour obtenir un deuxième symbole de séquence de transmission, dans lequel le processeur est configuré pour déterminer ensemble le premier schéma de permutation, le premier ensemble de coefficients de filtre direct et le premier ensemble de coefficients de filtre de rétroaction de sorte qu'une erreur de détection associée à la détection d'un symbole de séquence d'entrée dans une version recevable du premier symbole de séquence de transmission ait une première valeur d'erreur, et pour déterminer ensemble le deuxième schéma de permutation, le deuxième ensemble de coefficients de filtre direct et le deuxième ensemble de coefficients de filtre de rétroaction de sorte qu'une erreur de détection associée à la détection d'un symbole de séquence d'entrée dans une version recevable du deuxième symbole de séquence de transmission ait une deuxième valeur d'erreur, la première valeur d'erreur étant plus grande que la deuxième valeur d'erreur ou la deuxième valeur d'erreur étant plus grande que la première valeur d'erreur.

10. Appareil selon l'une des revendications 3 à 9, dans lequel le filtre direct (309) est un bloc filtrant présentant N colonnes successives ou N rangées successives, chaque colonne ou chaque rangée représentant un ensemble différent de coefficients de filtre, dans lequel le filtre direct (309) est configuré pour multiplier la séquence interférée par une première colonne ou une première rangée, pour obtenir un premier symbole de séquence de transmission, et pour multiplier la séquence interférée par une deuxième colonne ou par une deuxième rangée, pour obtenir un deuxième symbole de séquence de transmission, dans lequel le filtre de rétroaction (307) présente N colonnes successives ou *N* rangées successives, dans lequel le processeur est configuré pour déterminer, ensemble et successivement, les N colonnes successives ou les N rangées du filtre direct (309) et les *N* colonnes successives ou les N rangées successives du filtre de rétroaction (307) en commençant par une première colonne ou une première rangée et en terminant par une *N*-ième colonne ou une *N*-ième rangée, ou en commençant par une *N*-ième colonne ou une *N*-ième rangée et en terminant par une première colonne ou une première rangée.

11. Appareil selon la revendication 10, dans lequel le processeur est configuré pour déterminer les colonnes ou les rangées du filtre direct (309) et les colonnes ou les rangées du filtre de rétroaction (307) et un schéma de permutation pour chaque rangée ou colonne du filtre direct (309) de manière itérative en commençant par une première colonne ou une première rangée du filtre direct (309) et par une première colonne ou une première rangée du filtre de rétroaction (307) ou en commençant par la *N*-ième colonne ou la *N*-ième rangée du filtre direct (309) et la *N*-ième colonne ou la *N*-ième rangée du filtre de rétroaction (307), dans lequel une direction d'itération est déterminée par un rapport de valeur d'erreur entre une erreur de détection associée à la détection d'un symbole de séquence d'entrée dans un premier symbole de séquence de transmission et une erreur de détection associée à la détection d'une autre séquence d'entrée dans un N-ième symbole de séquence de transmission.

12. Précodeur selon l'une des revendications 3 à 11, dans lequel le processeur est configuré pour déterminer les coefficients de filtre direct et les coefficients de filtre de rétroaction sur base d'une factorisation de Cholesky d'une matrice d'informations de canal.

13. Précodeur selon l'une des revendications 3 à 12, dans lequel le prédistorsionneur comprend un limiteur (305);
dans lequel les sorties de l'additionneur (303) sont couplées au limiteur (305);
dans lequel les sorties du limiteur (305) sont couplées aux entrées du filtre de rétroaction; et
dans lequel les sorties du limiteur (305) sont couplées aux entrées du filtre direct.

14. Processeur pour déterminer les coefficients de filtre direct et les coefficients de filtre de rétroaction,
dans lequel le processeur est adapté pour effectuer une factorisation, pour obtenir une matrice triangulaire unitaire L et une matrice diagonale D, de sorte que

$$P\Phi^{-1}P^{T} = L^{H}DL;$$

**caractérisé par le fait que** $\Phi$ est défini comme étant

$$\Phi = HH^{H} + \frac{N_{R}}{\gamma}T\ ;$$

où P est une matrice de permutation;
où $\gamma$ est un rapport signal / bruit;
où I désigne une matrice unitaire;
où H est une matrice de canal de dimension $N_{R} \times N_{T}$;
dans lequel le processeur est adapté pour déterminer une matrice $B_{opt}$ comprenant les coefficients de filtre de rétroaction à l'aide du rapport

$$B_{opt}^{H} = L^{-1} \, ;$$

dans lequel le processeur est adapté pour déterminer une matrice $F_{opt}$ comprenant les coefficients de filtre direct à l'aide du rapport

$$F_{opt}^{H} = \beta H^{H} P^{T} L^{H} D \, ; \, \text{et}$$

où $\beta$ est un facteur.

15. Processeur selon la revendication 14, dans lequel le processeur est configuré pour déterminer de manière itérative les coefficients de filtre de rétroaction et les coefficients de filtre direct à l'aide d'une factorisation d'une matrice de canal.

16. Précodeur pour précoder une séquence d'entrée présentant $N_R$ symboles, pour obtenir un séquence de transmission présentant $N_T$ symboles, pour empêcher des interférences spatiales lors de la transmission de la séquence de transmission par $N_T$ points de transmission à un point de réception via $N_T$ canaux différents, dans lequel chaque symbole de séquence de transmission que comporte la séquence de transmission doit être transmis par un point de transmission différent via un canal différent, le précodeur comprenant:

un permutateur (101) destiné à réordonner les symboles de la séquence d'entrée, pour obtenir une séquence permutée; et
un prédistorsionneur (107) destiné à introduire une interférence de compensation dans la séquence permutée à l'aide des informations de canal, pour obtenir la séquence de transmission de sorte que les interférences spatiales soient compensées dans une version reçue d'un certain symbole de la séquence de transmission, dans lequel le prédistorsionneur comprend un additionneur (303) destiné à additionner une séquence de rétroaction à la séquence permutée, pour obtenir une séquence interférée,
un filtre de rétroaction (307) destiné à filtrer la séquence interférée, pour fournir la séquence de rétroaction, et
un filtre direct (309) destiné à filtrer la séquence interférée, pour obtenir la séquence de transmission;
un processeur selon la revendication 14 ou 16, pour déterminer les coefficients de filtre direct utilisés par le filtre direct et les coefficients de filtre de rétroaction utilisés par le filtre de rétroaction, pour adapter le filtre direct (309) et le filtre de rétroaction (307) aux états de canal variables.

17. Précodeur selon la revendication 16, dans lequel le processeur est adapté pour déterminer la matrice B à l'aide de l'algorithme :

$$\Phi^{-1} = \left( HH^{H} + \frac{N_R}{\gamma} I \right)^{-1}$$

$$P = 1_{N_p}, D = 0_{N_p}$$

pour $i = N_R, ..., 1$

$$q = \underset{q'=1,...,i}{\arg \min} \, \Phi^{-1}(q', q')$$

$P_i = 1_{N_{R'}}$ dont les i-ième et q-ième rangées sont échangées

$$P = P_i P$$

$$\Phi^{-1} = P_i \Phi^{-1} P_i^T$$

$$D(i,i) = \Phi^{-1}(i,i)$$

$$\Phi^{-1}(1:i,i) = \Phi^{-1}(1:i,i)/D(i,i)$$

$$\Phi^{-1}(1:i-1,1:i-1) = \Phi^{-1}(1:i-1,1:i-1)$$
$$- \Phi^{-1}(1:i-1,i)\Phi^{-1}(1:i-1,i)^H D(i,i)$$

$L$ = *partie triangulaire* supérieure *de* $\Phi$

$$B^H = L^{-1}, F^H = H^H P^T L^H D$$

$$\chi = \left\| F^H(:,1) \right\|_2^2 + \sigma_v^2 \left\| F^H(:,2:N_R) \right\|_F^2$$

$$\beta = \sqrt{E_s / \chi}$$

$$F^H = \beta \cdot F^H$$

où i désigne une variable;
où q désigne une variable;
où q' désigne une variable;
où $\chi$ est une variable;
où $\sigma_v$ désigne une valeur de variance d'un signal de sortie.

18. Procédé pour déterminer les coefficients de filtre direct et les coefficients de filtre de rétroaction, dans lequel la détermination des coefficients de filtre direct et des coefficients de filtre de rétroaction comprend le fait d'effectuer une factorisation, pour obtenir une matrice triangulaire unitaire L et une matrice diagonale D, de sorte que

$$P\Phi P^T = LDL^H;$$

**caractérisé par le fait que** $\Phi$ est défini comme étant

$$\Phi = HH^H + \frac{N_R}{\gamma}T ;$$

où P est une matrice de permutation ;
où $\gamma$ est un rapport signal / bruit;
où I désigne une matrice unitaire;
où H est une matrice de canal de dimension $N_R$ x $N_T$;
dans lequel la détermination d'une matrice B comprenant les coefficients de filtre de rétroaction comprend l'utilisation du rapport

$$B^H = L;$$

dans lequel la détermination d'une matrice F comprenant les coefficients de filtre directs comprend l'utilisation du rapport

$$F^H = \beta H^H P^T L^{H.-1} D^{-1}; \text{ et}$$

dans lequel $\beta$ est un facteur.

**19.** Procédé selon la revendication 18, dans lequel le procédé comprend la détermination de manière itérative des coefficients de filtre de rétroaction et des coefficients de filtre direct à l'aide d'une factorisation d'une matrice de canal.

**20.** Procédé pour précoder un séquence d'entrée présentant $N_R$ symboles, pour obtenir un séquence de transmission présentant $N_T$ symboles, pour empêcher des interférences spatiales lors de la transmission de la séquence de transmission par les $N_T$ points de transmission à un point de réception via $N_T$ canaux différents, dans lequel chaque symbole de séquence de transmission que comporte la séquence de transmission doit être transmis par un point de transmission différent via un canal différent, le procédé comprenant:

réordonner les symboles de séquence d'entrée, pour obtenir une séquence permutée;
introduire une interférence de compensation dans la séquence permutée à l'aide des informations de canal, pour obtenir la séquence de transmission de sorte que les interférences spatiales soient compensées dans une version reçue d'un certain symbole de séquence de transmission,

dans lequel l'introduction d'une interférence de compensation comprend le fait d'additionner une séquence de rétroaction à la séquence permutée, pour obtenir une séquence interférée,
filtrer, à l'aide d'un filtre de rétroaction, la séquence interférée, pour fournir la séquence de rétroaction, et
filtrer, à l'aide d'un filtre direct, la séquence interférée, pour obtenir la séquence de transmission;
déterminer les coefficients de filtre direct utilisés par le filtre direct et les coefficients de filtre de rétroaction utilisés par le filtre de rétroaction selon la revendication 18 ou la revendication 19, pour adapter le filtre direct (309) et le filtre de rétroaction (307) aux états de canal variables.

**21.** Procédé pour déterminer des coefficients de filtre direct et des coefficients de filtre de rétroaction,
dans lequel la détermination des coefficients de filtre directs et des coefficients de filtre de rétroaction comprend le fait d'effectuer une factorisation, pour obtenir une matrice triangulaire unitaire L et une matrice diagonale D, de sorte que

$$P\Phi^{-1} P^T = L^H DL;$$

**caractérisé par le fait que** $\Phi$ est défini comme étant

$$\Phi = HH^H + \frac{N_R}{\gamma}T \ ;$$

où P est une matrice de permutation;
où $\gamma$ est un rapport signal / bruit;
où I désigne une matrice unitaire;
où H est une matrice de canal de dimension $N_R$ x $N_T$;
dans lequel la détermination d'une matrice $B_{opt}$ comprenant les coefficients de filtre de rétroaction comprend l'utilisation du rapport

$$B_{opt}^H = L^{-1} \ ;$$

dans lequel la détermination d'une matrice $F_{opt}$ comprenant les coefficients de filtre directs comprend l'utilisation du rapport

$$F_{opt}^H = \beta H^H \ P^T \ L^{H.-1} \ D^{-1} \ ; \ \text{et}$$

dans lequel $\beta$ est un facteur.

22. Procédé selon la revendication 21, dans lequel le procédé comprend la détermination de manière itérative des coefficients de filtre de rétroaction et des coefficients de filtre direct à l'aide d'une factorisation d'une matrice de canal.

23. Procédé pour précoder un séquence d'entrée présentant $N_R$ symboles, pour obtenir une séquence de transmission présentant $N_T$ symboles, pour prévenir des interférences spatiales lors de la transmission de la séquence de transmission par les $N_T$ points de transmission à un point de réception via $N_T$ canaux différents, dans lequel chaque symbole de séquence de transmission que comporte la séquence de transmission doit être transmis par un point de transmission différent via un canal différent, le procédé comprenant:

réordonner les symboles de séquence d'entrée, pour obtenir une séquence permutée;
introduire une interférence de compensation dans la séquence permutée à l'aide des informations de canal, pour obtenir la séquence de transmission de sorte que les interférences spatiales soient compensées dans une version reçue d'un certain symbole de séquence de transmission,

dans lequel l'introduction d'une interférence de compensation comprend l'addition d'une séquence de rétroaction à la séquence permutée, pour obtenir une séquence interférée,
filtrer, à l'aide d'un filtre de rétroaction, la séquence interférée, pour fournir la séquence de rétroaction, et
filtrer, à l'aide d'un filtre direct, la séquence interférée, pour obtenir la séquence de transmission; et
déterminer les coefficients de filtre direct utilisés par le filtre direct et les coefficients de filtre de rétroaction utilisés par le filtre de rétroaction selon la revendication 21 ou 22, pour adapter le filtre direct (309) et le filtre de rétroaction (307) aux états de canal variables.

24. Programme d'ordinateur pour réaliser le procédé selon l'une des revendications 18 à 23 lorsque le programme d'ordinateur est exécuté sur un ordinateur.

FIG. 1

FIG. 2

FIG. 3

FIG. 4

$$P = \begin{bmatrix} 0 & 1 & 0 \\ 0 & 0 & 1 \\ 1 & 0 & 0 \end{bmatrix}$$

$$B^{H}{-}1 = \begin{bmatrix} 0 & 0 & 0 \\ b^{*}_{2,1} & 0 & 0 \\ b^{*}_{3,1} & b^{*}_{3,2} & 0 \end{bmatrix}$$

EP 1 782 554 B1

TABLE 1
CALCULATION OF THP FILTER WITH SUBOPTIMUM ORDERING

$$\Phi = HH^H + \frac{N_R}{\gamma} \, 1$$

$P = 1_{NR}, \ D = 0_{N_R}$

for $i = 1, ..., N_R$

  $q = \text{argmin} \ \Phi(q', q')$

      $q' = i, ..., N_R$

  $P_i = 1_{N_R}$ whose i-th and q-th rows are exchanged $P = P_i P$

  $\Phi = P_i \Phi P_i^T$

  $D(i,i) = \Phi(i,i)$

  $\Phi(i:N_R,i) = \Phi(i:N_R,i)/D(i,i)$

  $\Phi(i+1:N_R,i+1:N_R) = \Phi(i+1:N_R,i+1:N_R)$

    $-\Phi(i+1:N_R,i)\Phi(i+1:N_R,i)^H D(i,i)$

$L = $ lower triangular part of $\Phi$

$B^H = L, F^H = H^H P^T L^{H,-1} D^{-1}$

$\chi = \| F^H(:,1) \|_2^2 + \sigma_v^2 \| FH(:,2:N_R) \|_F^2$

$\beta = \sqrt{E_S/\chi}$

$F^H = \beta F^H$

## FIG. 5

$v = Pu$

for $i = 1, ..., NR$

    $v(i) = M(v(i) - B^H(i,:)v)$

$\kappa = F^H v$

## FIG. 6

FIG. 7

$$\Phi^{-1} = (HH^H + \tfrac{N_R}{\gamma}1)^{-1}$$

$$P = 1_{NR}, \; D = 0_{N_R}$$

$$\underline{\text{for } i = N_R,\dots,\, 1}$$

$$q = \underset{q'=1,\dots,\,i}{\arg\min}\; \Phi^{-1}(q', q')$$

$$P_i = 1_{N_R} \text{ whose } i\text{-th and } q\text{-th rows are exchanged}$$

$$P = P_i P$$

$$\Phi^{-1} = P_i \Phi^{-1} P_i^T$$

$$D(i,i) = \Phi^{-1}(i,i)$$

$$\Phi^{-1}(1{:}i,\, i) = \Phi^{-1}(1{:}i,\, i)/D(i,i)$$

$$\Phi^{-1}(1{:}i{-}1,\, 1{:}i{-}1) = \Phi^{-1}(1{:}i{-}1,\, 1{:}i{-}1)$$
$$\qquad -\Phi^{-1}(1{:}i{-}1,\, i)\Phi^{-1}(1{:}i{-}1,i)^H D(i,i)$$

$$L = \text{lower triangular part of } \Phi^{-1}$$

$$B^H = L^{-1}, \; F^H = H^H P^T L^H D$$

$$\chi = \| F^H(:,1) \|_2^2 + \sigma_v^2 \| F^H(:,2{:}N_R) \|_F^2$$

$$\beta = \sqrt{E_S/\chi}$$

$$F^H = \beta F^H$$

## FIG. 8

| optimum THP in [5] | optimum THP proposed | suboptimum THP proposed | linear MMSE |
|---|---|---|---|
| $\tfrac{17}{6}N_R^4$ | $\tfrac{7}{2}N_R^3$ | $\tfrac{13}{6}N_R^3$ | $\tfrac{13}{6}N_R^3$ |

## FIG. 9

FIG. 10

FIG. 11

FIG. 12

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **G. S. FOSCHINI ; M. J. GANS.** On Limits of Wireless Communications in a Fading Environment when Using Multiple Antennas. *Wireless Personal Communications,* March 1998, vol. 6 (3), 311-335
- **R. FISCHER ; C. WINDPASSINGER ; A. LAMPE ; J. HUBER.** Space-Time Transmission using Tomlinson-Harashima Precoding. *Proc. of 4. ITG Conference on Source and Channel Coding,* January 2002, 139-147
- **M. TOMLINSON.** New automatic equalizer employing modulo arithmetic. *Electronics Levers,* March 1971, vol. 7 (5/6), 138-139
- **H. HARASHIMA ; H. MIYAKAWA.** *Matched-Transmission Technique for Channels With Intersymbol Interference,* August 1972, vol. 20 (4), 774-780
- **M. JOHAM ; J. BREHMER ; W. UTSCHICK.** MMSE Approaches to Multi-User Spatio-Temporal Tomlinson-Harashima Precoding. *Proc. of 5. ITG Conference on Source and Channel Coding,* January 2004, 387-394
- Precoding for Point-to-Multipoint Transmission over MIMO ISO Channels. **R. F. H. FISCHER.** International Zurich Seminar on Communications. 18 February 2004
- **R. F.H. FISHER ; C. A. WINDPASSINGER.** Improved MIMO Precoding for Decentralized Receivers Resembling Concepts from Lattice Reduction. Globecom, 2003, 1852-1856
- **J. A. NOSSEK ; M. JOHAM ; W. UTSCHICK.** Transmit Processing in MIMO Wireless Systems. IEEE 6th CAS Symposium on Emerging Technologies: Mobile and Wireless Communications, 31 May 2004, I-18-I-23
- **M. JOHAM ; J. BREHMER ; A. VOULGARELIS ; W. UTSCHICK.** Multiuser Spatio-Temporal Tomlinson-Harashima Precoding for Frequency Selective Vector Channels. ITG Workshop on Smart Antennas, 2004, 208-215
- Appendix E: Precoding for MIMO Channels. **R. F.H. FISCHER.** Precoding and Signal Shaping for Digital Transmission. John Wiley & Sons, Inc, 2002
- **G. H. GOLUB ; C.F. V. LOAN.** Matrix Computations. The Johns Hopkins University Press, 1996